(19) Europäisches Patentamt / European Patent Office / Office européen des brevets

(11) **EP 3 975 655 B1**

(12) **EUROPEAN PATENT SPECIFICATION**

(45) Date of publication and mention
of the grant of the patent:
**04.12.2024 Bulletin 2024/49**

(21) Application number: **20833503.4**

(22) Date of filing: **22.06.2020**

(51) International Patent Classification (IPC):
**H04W 74/00** *(2009.01)* **H04W 74/0833** *(2024.01)*

(52) Cooperative Patent Classification (CPC):
**H04W 74/002; H04W 74/0833**

(86) International application number:
**PCT/KR2020/008029**

(87) International publication number:
**WO 2020/262893 (30.12.2020 Gazette 2020/53)**

(54) **METHOD AND DEVICE FOR PERFORMING BACKOFF IN TWO-STEP RANDOM ACCESS PROCEDURE IN WIRELESS COMMUNICATION SYSTEM**

VERFAHREN UND VORRICHTUNG ZUR DURCHFÜHRUNG VON BACKOFF IN EINEM ZWEISTUFIGEN ZUFALLSZUGRIFFSVERFAHREN IN EINEM DRAHTLOSEN KOMMUNIKATIONSSYSTEM

DISPOSITIF ET PROCÉDÉ POUR L'EXÉCUTION D'UNE RÉDUCTION DE PUISSANCE DANS UNE PROCÉDURE D'ACCÈS ALÉATOIRE EN DEUX ÉTAPES DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2019 KR 20190075279**

(43) Date of publication of application:
**30.03.2022 Bulletin 2022/13**

(73) Proprietor: **Samsung Electronics Co., Ltd.
Gyeonggi-do 16677 (KR)**

(72) Inventors:
• **JANG, Jaehyuk**
**Suwon-si, Gyeonggi-do 16677 (KR)**
• **AGIWAL, Anil**
**Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(56) References cited:
**WO-A1-2018/127502**

• **NTT DOCOMO ET AL: "Discussion on Procedure for Two-step RACH", vol. RAN WG1, no. Reno, USA; 20190513 - 20190517, 13 May 2019 (2019-05-13), XP051727647, Retrieved from the Internet <URL:http://www.3gpp.org/ftp/Meetings%5F3GPP%5FSYNC/RAN1/Docs/R1%2D1906193%2Ezip> [retrieved on 20190513]**
• **EMAIL DISCUSSION RAPPORTEUR (ZTE): "Procedures and mgsB content [105bis#30][NR/2-step RACH]", vol. TSG-WG2, 3 May 2019 (2019-05-03), pages 1 - 91, XP051710625, Retrieved from the Internet <URL:http://www.3gpp.org/ftp/tsg%5Fran/WG2%5FRL2/TSGR2%5F106/Docs/R2%2D1906308%2Ezip>**
• **ERICSSON: "Fallback for 2-step RA", vol. RAN WG2, no. Reno, Nevada, US ;20190513 - 20190517, 13 May 2019 (2019-05-13), XP051730405, Retrieved from the Internet <URL:http://www.3gpp.org/ftp/Meetings%5F3GPP%5FSYNC/RAN2/Docs/R2%2D1906954%2Ezip> [retrieved on 20190513]**

- **ERICSSON: "Back-off for 2-step RA", vol. RAN WG2, no. Reno, US; 20190513 - 20190517, 13 May 2019 (2019-05-13), XP051730406, Retrieved from the Internet <URL:http://www.3gpp.org/ftp/Meetings%5F3GP P%5FSYNC/RAN2/Docs/R2%2D1906955%2Ezip > [retrieved on 20190513]**
- **INTERDIGITAL INC: "Perspectives on Operation of Two-Step RACH", vol. RAN WG1, no. Athens, Greece; 20190225 - 20190301, 16 February 2019 (2019-02-16), XP051600276, Retrieved from the Internet <URL:http://www.3gpp.org/ftp/tsg%5Fran/WG1 %5FRL1/TSGR1%5F96/Docs/R1%2D1902583%2 Ezip> [retrieved on 20190216]**
- **ZTE CORPORATION ET AL: "Consideration on 2-step RACH procedure", no. China, Xian; 20190408 - 20190412, 6 April 2019 (2019-04-06), XP051700892, Retrieved from the Internet <URL:http://www.3gpp.org/ftp/Meetings%5F3GP P%5FSYNC/RAN2/Docs/R2%2D1903549%2Ezip > [retrieved on 20190406]**

- **ZTE: "Procedures and mgsB content [105bis#30][NR/2step RACH]' R2-1906308", 3GPP TSG RAN WG2 MEETING #106, RENO, USA, 3 May 2019 (2019-05-03), XP051710625**
- **LG ELECTRONICS INC.: "Contention-based 2-Step RACH procedure', R2-1903729", 3GPP TSG RAN WG2 MEETING #105BIS, 29 March 2019 (2019-03-29), Xi'an, China, XP051701070**
- **SAMSUNG: "2 Step RA: MsgA Aspects', R2-1905719", 3GPP TSG RAN WG2 MEETING #106, 2 May 2019 (2019-05-02), Reno, USA, XP051710073**
- **CAICT: "Considerations on Procedure for Two-step RACH', R1-1905126", 3GPP TSG RAN WG1 MEETING #96BIS, 29 March 2019 (2019-03-29), Xi' an, China, XP051692014**

**Description**

Technical Field

The disclosure relates to a method and a device for applying a backoff when a two-step random access procedure is used in a wireless communication system.

Background Art

To meet the demand for wireless data traffic having increased since deployment of 4G communication systems, efforts have been made to develop an improved 5G or pre-5G communication system. Therefore, the 5G or pre-5G communication system is also called a "Beyond 4G Network" or a "Post LTE System". The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (RAN) as the above-described big data processing technology may also be considered an example of convergence of the 5G technology with the IoT technology. NTT DOCOMO ET AL: "Discussion on Procedure for Two-step RACH", 3GPP DRAFT; R1-1906193 DISCUSSION ON PROCEDURE FOR TWOSTEP RACH FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; vol. RAN WG1, no. Reno, USA; 20190513 - 20190517 13 May 2019 (2019-05-13), provides a discussion on a procedure for two-step RACH. EMAIL DISCUSSION RAPPORTEUR (ZTE): "Procedures and mgsB content [105bis#30][NR/2-step RACH]", 3GPP DRAFT; R2-1906308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG-WG2 3 May 2019 (2019-05-03), pages 1-91, discusses pocedures and mgsB content. ERICSSON: "Fallback for 2-step RA", 3GPP DRAFT; R2-1906954 - FALLBACK FOR 2-STEP RA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, US ;20190513 - 20190517 13 May 2019 (2019-05-13), discusses the 2-step Random Access procedure. ERICSSON: "Back-off for 2-step RA", 3GPP DRAFT; R2-1906955 - BACKOFF FOR 2-STEP RA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, US; 20190513 - 20190517 13 May 2019 (2019-05-13), discusses back-off for 2-step RA. INTERDIGITAL INC: "Perspectives on Operation of Two-Step RACH", 3GPP DRAFT; R1-1902583 PERSPECTIVES ON OPERATION OF TWOSTEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN, vol. RAN WG1, no. Athens, Greece; 20190225 - 20190301 16 February 2019 (2019-02-16), provides consideration on 2-step RACH procedure. ZTE CORPORATION ET AL: "Consideration on 2-step RACH procedure", 3GPP DRAFT; R2-1903549_CONSIDERATION ON 2-STEP RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China, Xian; 20190408 - 20190412 6 April 2019 (2019-04-06), provides perspectives on Operation of Two-Step RACH.

Disclosure of Invention

Technical Problem

It is an aspect of the disclosure to provide a method for indicating a backoff when a base station has received an entire MsgA in connection with a two-step random access, and when a part (Msg1) of the MsgA has been received.

Solution to Problem

The invention is set out in the appended set of claims.

Advantageous Effects of Invention

According to an embodiment of the disclosure, a base station may differently indicate a backoff according to which channel of the MsgA has undergone a collision when a two-step random access is performed, thereby effectively controlling collisions.

Brief Description of Drawings

FIG. 1A illustrates the structure of an LTE system;
FIG. 1B illustrates a radio protocol structure in LTE and NR systems;
FIG. 1C illustrates an example of downlink and uplink channel frame structures in beam-based communication of an NR system;
FIG. 1D illustrates a procedure in which a UE performs contention-based four-step random access to a base station according to the disclosure:
FIG. 1E illustrates a procedure in which a UE performs a two-step random access procedure on a base station according to the disclosure:
FIG. 1F illustrates embodiment 1 relating to a method for determining whether to use BI information, which is included in a message (Msg2 or MsgB), when a UE performs two-step random access according to an embodiment of the disclosure;
FIG. 1G illustrates embodiment 2 relating to a method for determining whether to use BI information, which is included in a message (Msg2 or MsgB), when a UE performs two-step random access according to an embodiment of the disclosure;
FIG. 1H illustrates embodiment 3 relating to a method for determining whether to use BI information, which is included in a message (Msg2 or MsgB), when a UE performs two-step random access according to an embodiment of the disclosure;
FIG. 1I illustrates a block configuration of a UE in a wireless communication system according to the disclosure;
FIG. 2 illustrates the structure of a UE according to an embodiment of the disclosure; and
FIG. 3 illustrates a structure of a base station according to an embodiment of the disclosure.

Mode for Carrying out the Invention

Hereinafter, embodiments of the disclosure will be described in detail with reference to the accompanying drawings. In the following description of the disclosure, a detailed description of known functions or configurations incorporated herein will be omitted when it may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following description, the disclosure will be described using terms and names defined in LTE and NR standards, which are the latest standards specified by the 3rd generation partnership project (3GPP) group among existing communication standards, for the convenience of description. However, the disclosure is not limited by these terms and names, and may be applied in the same way to systems that conform other standards. In particular, the disclosure may be applied to the 3GPP NR (5th generation mobile communication standard).

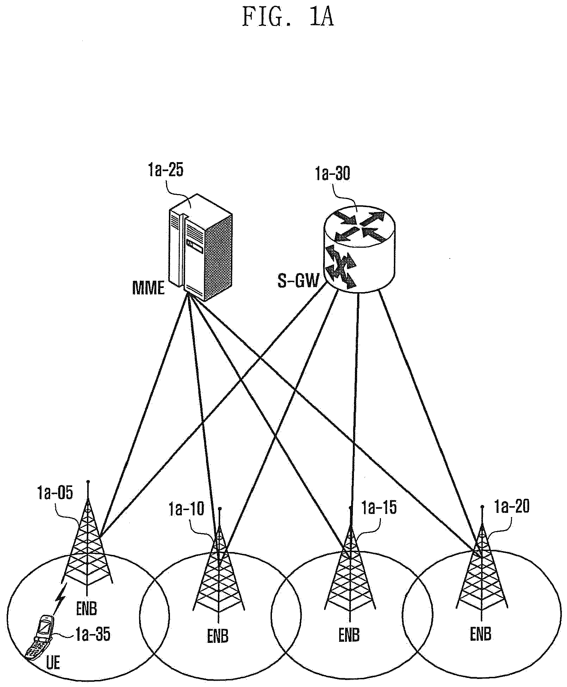

FIG. 1A illustrates the structure of an LTE system according to the disclosure. An NR system also has a similar structure.

Referring to FIG. 1A, a wireless communication system includes a plurality of eNBs 1a-05, 1a-10, 1a-15, and 1a-20, a mobility management entity (MME) 1a-25, and a serving-gateway (S-GW) 1a-30. A user equipment (hereinafter, a UE or terminal) 1a-35 accesses an external network through the eNBs 1a-05, 1a-10, 1a-15, and 1a-20 and the S-GW 1a-30.

The eNBs 1a-05, 1a-10, 1a-15, and 1a-20 are access nodes of a cellular network and provide a wireless connection to UEs accessing the network. That is, the eNBs 1a-05, 1a-10, 1a-15, and 1a-20 perform scheduling by collecting state information, such as buffer states of the UEs, available transmission power states, and channel states, in order to service traffic of users, and support connection between the UEs and a core network (CN). The MME 1a-25 corresponds to a device which is responsible for various control functions including a mobility management function for a UE and is connected to a plurality of eNBs, and the S-GW 1a-30 corresponds to a device which provides a data bearer. In addition, the MME 1a-25 and the S-GW 1a-30 may further perform authentication, bearer management, and the like for a UE accessing a network, and processes a packet arrived from the eNBs 1a-05, 1a-10, 1a-15, and 1a-20 or a packet to be transferred to the eNBs 1a-05, 1a-10, 1a-15, and 1a-20.

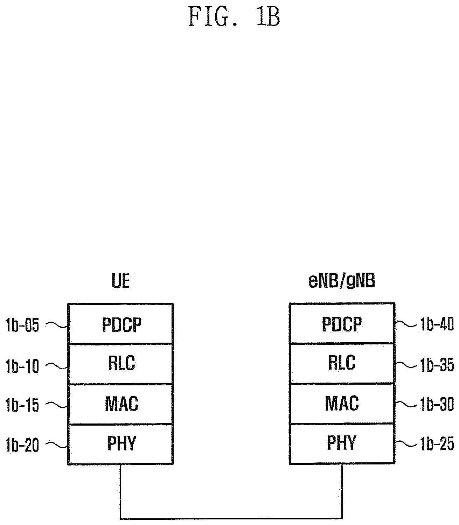

FIG. 1B illustrates a wireless protocol structure in LTE and NR systems according to the disclosure.

Referring to FIG. 1B, in relation to a wireless protocol structure of an LTE system, each of a LTE and an eNB includes a packet data convergence protocol (PDCP) layer 1b-05 or 1b-40, a radio link control (RLC) layer 1b-10 or 1b-35, and a medium access control (MAC) layer 1b-15 or 1b-30. The packet data convergence protocol (PDCP) layer 1b-05 or 1b-40 is responsible for IP header compression/decompression, and the radio link control (hereinafter, referred to as RLC) 1b-10 or 1b-35 reconfigures PDCP packet data units (PDCP PDUs) to a proper size. The MAC layer 1b-15 or 1b-30 is connected to several RLC-layer devices configured in one UE, and performs an operation of multiplexing RLC PDUs to a MAC PDU and demultiplexing RLC PDUs from the MAC PDU. Physical layers 1b-20 and 1b-25 channel-code and modulate higher layer data into OFDM symbols and transmit the OFDM symbols through a wireless channel, or demodulate and channel-decode OFDM symbols received through the wireless channel to transfer the OFDM symbols to a higher layer. In addition, for additional error correction, hybrid ARQ (HARQ) is used in the physical layers, and a receiver side transmits 1-bit information indicating whether a packet transmitted by a transmitter side is received. This information is referred to as HARQ ACK/NACK information. Downlink HARQ ACK/NACK information for uplink data transmission may be transmitted through a physical hybrid-ARQ indicator channel (PHICH) in case of the LTE system. In case of an NR system, it can be determined whether retransmission is required or retransmission is enough, through scheduling information of a corresponding UE in a physical downlink control channel (PDCCH) which is a channel through which downlink/uplink resource allocation is transmitted. This is because asynchronous HARQ is applied in the NR system. Uplink HARQ ACK/NACK information for downlink data transmission may be transmitted through a physical uplink control channel (PUCCH) or a physical uplink shared channel (PUSCH) physical channel. The PUCCH is generally transmitted through an uplink of a primary cell (PCell) which is to be described later. However, if there is a support by a UE, an eNB may additionally transmit the PUCCH to the corresponding LTE through a secondary cell (SCell) which is to be described later. This SCell is referred to as a PUCCH SCell.

Although not illustrated, a radio resource control (RRC) layer exists above a PDCP layer of each of a UE and an eNB, and the RRC layer may transmit or receive an access- and measurement-related configuration control message in order to control radio resources.

Meanwhile, the PHY layer may include one or a plurality of frequencies/carriers, and a technology of simultaneously configuring and using a plurality of frequencies is called a carrier aggregation technology (hereinafter, referred to as CA). Only one carrier has been used for communication between a terminal (or user equipment (UE)) and a base station (E-UTRAN nodeB (eNB)) in the past, but the CA technology can significantly increase the transmission amount as much as the number of subcarriers by additionally using a main carrier and one or more subcarriers. Meanwhile, in the LTE system, a cell in an eNB using a main carrier is referred to as a main cell or a primary cell (PCell), and a cell in an eNB using a subcarrier is referred to as a sub-cell or a secondary cell (SCell).

EP 3 975 655 B1

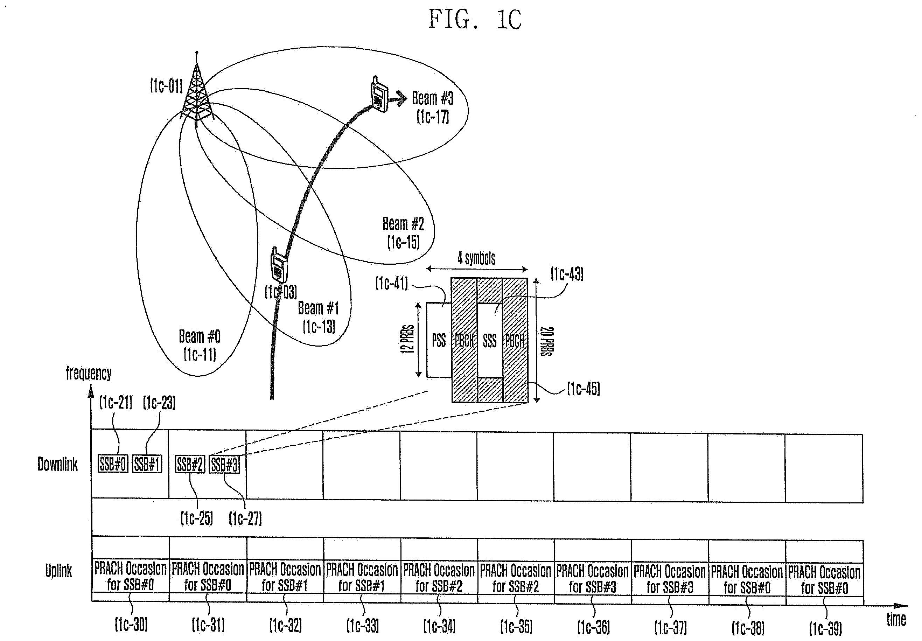

FIG. 1C illustrates an example of downlink and uplink channel frame structures in beam-based communication of an NR system according to the disclosure

In FIG. 1C, an eNB 1c-01 transmits a signal in the form of beams 1c-11, 1c-13, 1c-15, and 1c-17 in order to transmit wider coverage or a stronger signal. Accordingly, a LTE 1c-03 in a cell is required to transmit or receive data by using a specific beam (beam #1 1c-13 in this exemplary drawing) transmitted by the eNB.

Meanwhile, depending on whether the UE is connected to the eNB, the state of the UE is divided into an idle mode (RRC _IDLE) and a connected mode (RRC_CONNECTED). Accordingly, the eNB does not recognize location of the UE in the idle mode.

If the UE in the idle mode is to be shifted to the connected mode, the UE may receive synchronization signal blocks (SSBs) 1c-21, 1c-23, 1c-25, and 1c-27 transmitted by the eNB. The SSBs are transmitted periodically according to a cycle configured by the eNB, and each of the SSBs may include a primary synchronization signal (PSS) 1c-41, a secondary synchronization signal (SSS) 1c-43, and a physical broadcast channel (PBCH).

In this exemplary drawing, a scenario in which an SSB is transmitted for each beam is assumed. For example, it is assumed that SSB #0 1c-21 is transmitted using beam #0 1c-11, SSB #1 1c-23 is transmitted using beam #1 1c-13, SSB #2 1c-25 is transmitted using beam #2 1c-15, and SSB #3 1c-27 is transmitted using beam #3 1c-17. In this drawing, it is assumed that the UE in the idle mode is located in beam #1. However, if the UE in the connected mode performs random access, the LTE selects an SSB received at the time of performing random access.

Accordingly, in FIG. 1C, the UE receives SSB #1 transmitted using beam #1. If SSB #1 is received, the LTE acquires a physical cell identifier (PCI) of the eNB through a PSS and an SSS, and receives a PBCH, so that the UE may identify an identifier (i.e., #1) of the currently received SSB, a location at which the SSB is currently received within a 10 ms frame, and a system frame number (SFN) having a cycle of 10.24 seconds in which the SSB is located. In addition, the PBCH may include a master information block (MIB), and the MIB may include information indicating a location on which system information block type 1 (SIB1) for broadcasting more detailed configuration information of the cell is received. If the SIB1 is received, the UE may identify the total number of SSBs transmitted by the eNB and may identify location (assuming a scenario in which a PRACH occasion is allocated every 1 ms in this exemplary drawing: indicated by reference numerals 1c-30 to 1c-39) of physical random access channel (PRACH) occasions in which the UE may perform random access to be shifted to the connected mode (more precisely, capable of transmitting a preamble which is a physical signal specifically designed for uplink synchronization). In addition, the UE may identify that a PRACH occasion, among the PRACH occasions, is mapped to an SSB index, based on the information. For example, in this exemplary drawing, a scenario in which a PRACH occasion is allocated every 1 ms and a scenario in which a half of an SSB is allocated per PRACH occasion (that is, two PRACH occasions per SSB) are assumed. Accordingly, a scenario in which two PRACH occasions are allocated for each SSB from a PRACH occasion starting according to an SFN value is illustrated. That is, according to the scenario, 1c-30 and 1c-31 are allocated for SSB #0, and 1c-32 and 1c-33 are allocated for SSB #1. After configurations are made for all SSBs, PRACH occasions are allocated again for the first SSB (indicated by reference numerals 1c-38 and 1c-39).

Accordingly, the UE recognizes locations of the PRACH occasions 1c-32 and 1c-33 for SSB #1, and transmits a random access preamble at the currently earliest PRACH occasion among the PRACH occasions 1c-32 and 1c-33 corresponding to SSB #1 (for example, 1c-32). Since the eNB has received the preamble at the PRACH occasion 1c-32, it can be seen that the corresponding LTE has transmitted the preamble by selecting SSB #1. Accordingly, data may be transmitted or received through the corresponding beam when subsequent random access is performed.

Meanwhile, when the UE in the connected mode moves from the current (source) eNB to a target eNB due to handover, etc., the UE performs random access at the target eNB and selects an SSB as described above to perform an operation of transmitting a random access preamble. In addition, during handover, a handover command is transmitted to the UE to allow the UE to move from the source eNB to the target eNB. Here, the message may include a corresponding UE dedicated random access preamble identifier allocated to each SSB of the target eNB to enable use of the identifier at the time of performing random access at the target eNB. The eNB may not allocate a dedicated random access preamble identifier for all beams (depending on the current location of the UE, etc.), and some SSBs may not be allocated with a dedicated random access preamble (for example, allocation of a dedicated random access preamble to beam #2 and beam #3 only may occur). If a dedicated random access preamble is not allocated to an SSB selected by the LTE for preamble transmission, the LTE randomly selects a contention-based random access preamble to perform random access. For example, in this drawing, after the UE is located in beam #1 and first performs random access but fails, the LTE may be located in beam #3 to transmit a dedicated preamble when transmitting a random access preamble again. That is, even in one random access procedure, if preamble retransmission occurs, a contention-based random access procedure and a contention-free random access procedure may be mixed depending on whether a dedicated random access preamble is allocated to a selected SSB for each preamble transmission.

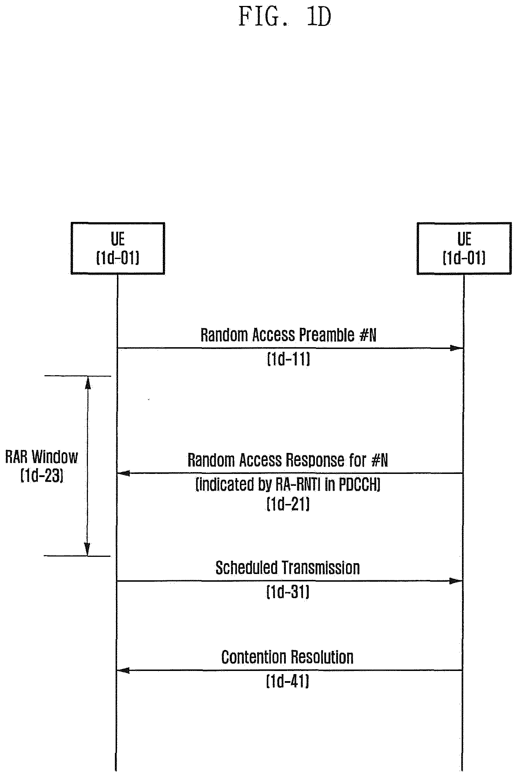

FIG. 1D illustrates a contention-based four-step random access procedure in which a UE performs, with respect to a base station, a contention-based four-step random access procedure that may be performed in initial access, re-access, handover, and other various cases where random access is required according to the disclosure

6

In order to perform access to a base station 1d-03, a UE 1d-01 selects a PRACH according to FIG. 1C described above and transmits a random access preamble through the corresponding PRACH (operation 1d-11). A case in which one or more UEs simultaneously transmit the random access preamble through the PRACH resources may occur. The PRACH resources may span over one subframe or only some of the symbols in one subframe may be used. Information about the PRACH resource is included in system information broadcast by a base station, and accordingly, the LTE may identify time/frequency resources used for transmission of a preamble. In addition, the random access preamble is a particular sequence specially designed to be receivable even when transmitted before being completely synchronized with the base station, and there may be a plurality of preamble identifiers (indexes) according to standards. If there is a plurality of preamble identifiers, the preamble transmitted by the UE may be a preamble randomly selected by the UE or may be a particular preamble designated by the base station.

Upon receiving the preamble, the base station may transmit a random access response (hereinafter, "RAR") message (this is also referred to as Msg2) to the UE in response to the preamble (operation 1d-21). The RAR message includes identifier information of the preamble used in operation 1d-11, uplink transmission timing correction information, uplink resource allocation information to be used for a subsequent operation (that is, operation 1d-31), and temporary UE identifier information. The identifier information of the preamble is transmitted to notify that the RAR message may include responses to respective preambles and which preamble the RAR message is transmitted in response to, for example, when a plurality of UEs transmit different preambles to attempt random access in operation 1d-11. The uplink resource allocation information, which is included in responses to respective preambles, is detailed information about resources to be used by the UE in operation 1d-31, and includes physical locations and sizes of the resources, a modulation and coding scheme used during transmission, and power adjustment information during transmission. The temporary UE identifier information is a value transmitted for use since the UE does not include an identifier allocated by the base station for communication with the base station if the UE having transmitted a preamble performs initial access.

Meanwhile, the RAR message may include not only the response(s) to each of the preambles, but also optionally include a backoff indicator (BI). The backoff indicator indicates a value transmitted to delay transmission randomly according to the value of the backoff indicator, rather than immediately retransmitting the preamble when the random access preamble needs to be retransmitted because random access is not successfully performed. More specifically, if the UE does not properly receive the RAR, or if contention resolution, which will be described later, is not properly achieved, the random access preamble should be retransmitted. Here, the value indicated by the back-off indicator may be indicated by the index values of the following table (Table 1), and the LTE selects a random value from among 0 to the values indicated by the index values, and after a period of time equal to the value, the UE retransmits the random access preamble. For example, if the base station indicates 5 (that is, 60 ms) as the BI value and the UE randomly selects a value of 23 ms among 0 to 60 ms, the selected value is stored in a parameter called PREAMBLE_BACKOFF, and the LTE performs a procedure of retransmitting the preamble after a 23 ms period of time. If the backoff indicator is not transmitted, and if random access is not successfully performed and thus the random access preamble needs to be retransmitted, the LTE immediately transmits the random access preamble.

[Table 1]

| Index | Backoff Parameter value (ms) |
|-------|------------------------------|
| 0 | 5 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |

(continued)

| Index | Backoff Parameter value (ms) |
|-------|------------------------------|
| 13    | 1920                         |
| 14    | Reserved                     |
| 15    | Reserved                     |

The RAR message needs to be transmitted within a predetermined period starting from a predetermined period time after the preamble is transmitted, and the period is referred to as a "RAR window". The RAR window 1d-23 starts from a time point at which a predetermined period of time has passed after the first preamble is transmitted. The predetermined period of time may have a subframe unit (1 ms) or a smaller value than thereof. In addition, the length of the RAR window 1d-23 may be a predetermined value set by the base station for each PRACH resource or for at least one PRACH resource set within a system information message broadcast by the base station. Meanwhile, when the RAR message is transmitted, the base station schedules the RAR message through a PDCCH, and the corresponding scheduling information is scrambled using a random access-radio network temporary identifier (RA-RNTI). The RA-RNTI is mapped to a PRACH resource used for transmission of the message 1d-11, the UE having transmitted a preamble via a specific PRACH resource attempts to receive a PDCCH based on a corresponding RA-RNTI and determines whether there is a corresponding RAR message. That is, if the RAR message is a response to the preamble transmitted by the UE in operation 1d-11 as shown in this exemplary drawing, the RA-RNTI used for the scheduling information of the RAR message may include information about transmission performed in operation 1d-11. To this end, the RA-RNTI is calculated according to the equation as follows:

$$RA\text{-}RNTI = 1 + s\_id + 14 * t\_id + 14 * 80 * f\_id + 14 * 80 * 8 * ul\_carrier\_id$$

Here, $s\_id$ denotes an index corresponding to a first OFDM symbol from which the preamble transmission occasion in operation 1d-11 is started, and has a value of $0 \leq s\_id < 14$ (that is, the maximum number of OFDMs in one slot). Further, $t\_id$ denotes an index corresponding to a first slot in which preamble transmission occasion in operation 1d-11 is started, and has a value of $0 \leq t\_id < 80$ (that is, the maximum number of slots in one system frame (10 ms)). Furthermore, $f\_id$ indicates the sequential position of a PRACH resource in a frequency domain through which the preamble transmission occasion in operation 1d-11 is transmitted, and has a value of $0 \leq f\_id < 8$ (that is, the maximum number of PRACHs in the frequency domain within the same period of time). In addition, $ul\_carrier\_id$ is a factor used to distinguish, if two carriers are used as uplink in connection with one cell, whether uplink through which the preamble is transmitted is a normal uplink (NUL) (in this case, $ul\_carrier\_id$ has a value of 0) or a supplementary uplink (SUL) (in this case, $ul\_carrier\_id$ has a value of 1).

Upon receiving the RAR message, the UE transmits a different message via a resource allocated through the RAR message according to various purposes described above (operation 1d-31). Here, the third transmitted message in this exemplary drawing may be referred to as Msg3 (that is, the preamble in operation 1d-11 is also referred to as Msg1, and the RAR in operation 1d-21 is also referred to as Msg2). Examples of Msg3 transmitted by the UE may include an RRCSetupRequest message, which is an RRC layer message, in case of initial access, an RRCReestablishmentRequest message in case of re-access, and an RRCReconfigurationComplete message in case of handover. Alternatively, a buffer status report (BSR) message for a resource request may be transmitted.

Thereafter, in a case of initial transmission (that is, in case that Msg3 does not include base station identifier information previously allocated to the UE, etc.), the UE may receive a contention resolution message from the base station (operation 1d-41). The content resolution message includes the same content as that transmitted by the UE through Msg3. Thus, even if a plurality of UEs select the same preamble in operation 1d-11, it is possible to notify of which UE the contention resolution message is transmitted in response to.

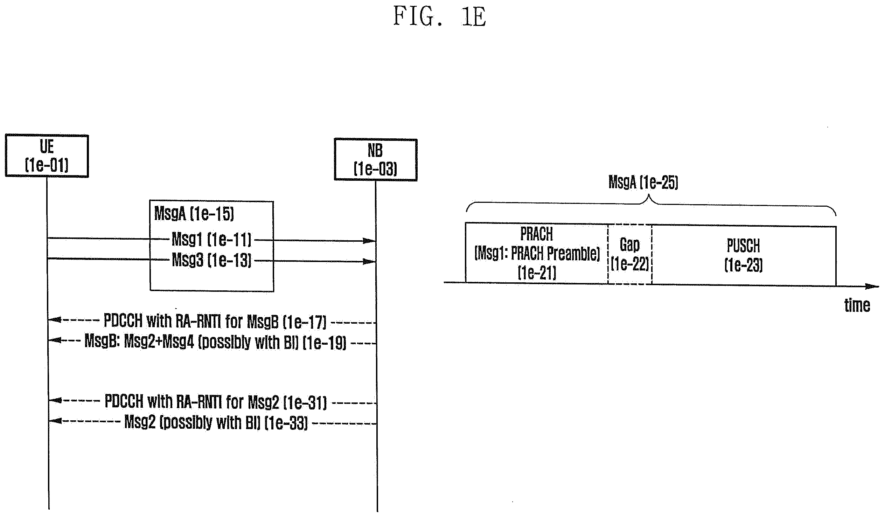

FIG. 1E illustrates a procedure in which a UE performs a two-step random access procedure to a base station.

As described above in FIG. 1D, general contention-based random access is performed through at least four steps, and if an error occurs in one step, the procedure may be further delayed. Accordingly, a scenario in which the random access procedure is reduced to a two-step procedure can be considered.

To this end, the LTE successively transmits preamble Msg1 1e-11 (corresponding to 1d-11) and Msg3 1e-13 (corresponding to 1d-31) in a four-step random access procedure, thereby transmitting MsgA 1e-15. Thereafter, the base station having received the MsgA transmits MsgB 1e-19 including information of Msg2 (RAR) (corresponding to 1d-21) and Msg4 (corresponding to 1d-41) in the four-step random access procedure. Thus, the random access procedure can be reduced.

Here, when the MsgA is shown in a time domain, the MsgA 1e-25 may include a PRACH resource 1e-21 for transmission of Msgl, a PUSCH resource 1e-23 for transmission of Msg3, and a gap resource 1e-22 for resolving interference problem that may occur during transmission to the PUSCH resource. In addition, Msg3 includes information related to Msg1, and thus it can be seen that Msg3 is transmitted by a UE having transmitted a predetermined preamble (Msgl).

Upon receiving both Msg1 and Msg3 included in MsgA, the base station transmits MsgB to the UE (operation 1e-19). Here, the MsgB may include the BI described above.

Meanwhile, if collision occurs due to transmission of several MsgAs in operation 1e-15, a case that the base station receives only Msg1(s) included in MsgA and cannot receive Msg3 may occur. Here, the base station may transmit, to the UE, aforementioned Msg2 (operation 1e-33) instead of MsgB (operation 1e-19), may change the procedure to the four-step random access procedure described in FIG. 1D, and thus performs the remaining random access procedure.

In addition, in case in which the base station receives the MsgA, multiple Msg1 receptions and only one Msg3 reception may occur. Here, the base station may transmit, to the UE, a response (i.e., MsgB) (operation 1e-19) to the LTE from which both Msg1 and Msg3 have been received and a response (i.e., Msg2) (operation 1e-33) to only Msg1. Different responses can be included in the same message or in different messages (operation 1e-19) (operation 1e-33). In case of responding with different messages as shown in this drawing, the base station enables an indicator to be included in the PDCCH (operation 1e-17) (operation 1e-31) for scheduling the MsgB or Msg2, notifies the UE of whether the scheduled message is MsgB or Msg2, and enables the UE to correctly perform decoding. Alternatively, the RA-RNTI value for scrambling the PDCCH may be distinguished by using a different value. Here, an identifier for determining whether MsgB is included is added in calculation of the RA-RNTI. Each of the MsgB or Msg2 messages may include the BI value described above. Thereafter, if random access is not successful, the UE needs to determine, using the BI value included in a message, whether to delay the preamble transmission.

In addition, if the UE does not establish a connection with the base station (for example, in order to shift from IDLE to CONNECTED) and thus the MsgA includes a common control channel (CCCH)-related message (e.g., messages such as RRCSetupRequest, RRCResumeRequest, RRCReestablishmentRequest, RRCSystemInfoRequest, etc. of the RRC layer), the contents in the MsgB include uplink transmission timing information (timing advance command (TAC)) transmitted through the above-described Msg2, temporary identifier (temporary C-RNTI) of a UE to be used in a base station by the UE in the future, and contention resolution related information (UE contention resolution identity) transmitted through Msg4. In addition, if the UE is already connected to the base station and thus the C-RNTI MAC CE including the identifier information of the UE has been transmitted through the MsgA, the MsgB is a message through which the base station transmits resource allocation to the UE using the identifier (C-RNTI) of the corresponding UE via the PDCCH.

Meanwhile, as described above in FIG. 1D, the UE performs random access for various purposes. For example, the UE may perform random access in order to transmit a message for establishing a connection while the LTE is not yet connected to the base station, or to transmit a message for recovering connection in a case in which the UE and base station were connected but a connection failure occurs due to an error. The above message is a message belonging to a common control channel (CCCH). Control messages belonging to the CCCH include RRCSetupRequest (when shifting from idle mode (RRC _IDLE) to connected mode), RRCResumeRequest (when shifting from inactive mode (RRC_INACTIVE) to connected mode), RRCReestablishmentRequest (when recovering connection), RRCSystem-InfoRequest (when requesting system information broadcasted by a base station), and the like. As described above, if the UE is not connected to the base station and thus the CCCH is included in MsgA as described above, the contents in the MsgB include uplink transmission timing information (timing advance command (TAC)) transmitted through Msg2 described above, a temporary identifier (temporary C-RNTI) of a UE, to be used by the UE in the base station in the future, and contention resolution-related information (UE contention resolution identity) transmitted through Msg4.

Meanwhile, when the UE normally accesses the base station, the UE may transmit or receive messages belonging to a dedicated control channel (DCCH) and a dedicated traffic channel (DTCH) in a connected mode (RRC_CONNECTED). In connection with the message transmitted by the UE, the UE transmits a "buffer status report (BSR)" message notifying that the UE currently includes data to be transmitted through uplink to the base station so as to request uplink resource allocation. To this end, the base station may allocate a dedicated PUCCH resource for transmission of a "scheduling request (SR)" with respect to a specific logical channel to the UE. Accordingly, when receiving the SR from the LTE through the PUCCH, the base station may allocate an uplink resource to be used for transmission of the BSR, and when transmitting the BSR through the corresponding uplink resource, the base station may identify the buffer state of the LTE and provide allocation of uplink resources for data.

On the other hand, if the base station does not allocate the SR to a specific logical channel (a logical concept that is divided according to the types of control and general data), or if the BSR cannot be transmitted because there is no uplink resource even if the base station performs allocation of the SR and the SR has been transmitted as many as the maximum number of SR transmissions, the LTE may perform random access and transmit the BSR through Msg3.

Accordingly, when the UE accesses the base station and then configures each logical channel for transmission of data belonging to a logical channel dedicated control channel (DCCH) and a dedicated traffic channel (DTCH), if the UE performs random access to perform transmission for the corresponding logical channel, the UE transmits the C-RNTI MAC CE including the identifier information of the UE through MsgA so as to notify that the subject performing the random access is the UE. In this case, the MsgB is a message through which the base station transmits resource allocation to the corresponding UE by using the identifier (C-RNTI) of the corresponding UE via the PDCCH.

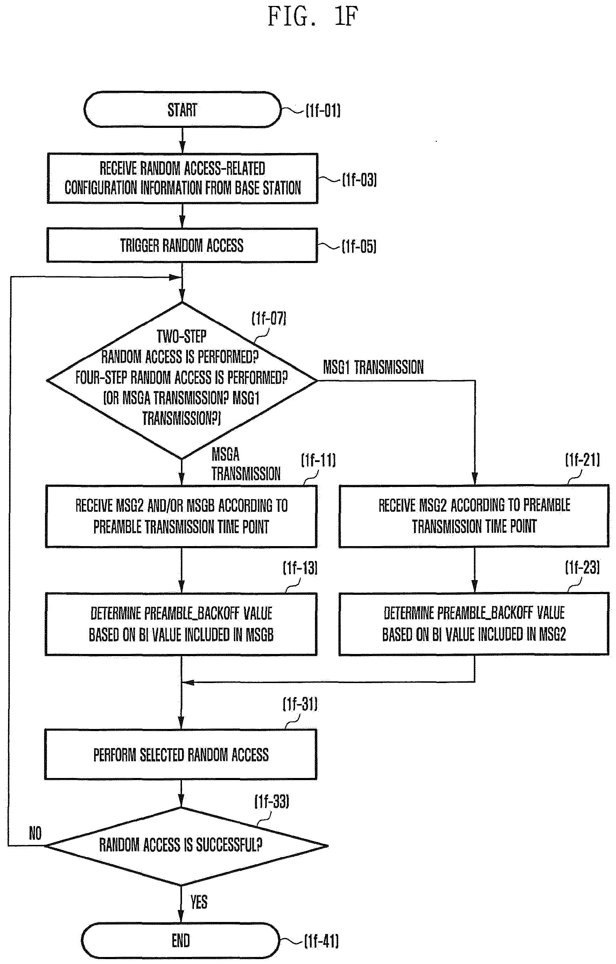

FIG. 1F illustrates embodiment 1 relating to a method for determining whether to use BI information, which is included in a message (Msg2 or MsgB), when a UE performs two-step random access according to an embodiment of the disclosure.

At operation 1f-01, the method starts. The UE receives random access related configuration information from a base station, which is currently camped on or being accessed, through an RRC layer message (operation 1f-03). The RRC layer message may be transmitted as a system information message (SIB) that the base station broadcasts to all UEs in a cell, or may be transmitted, in connection with connected LTEs, only to the corresponding LTE through an RRCReconfiguration message. The random access-related configuration information includes configuration information for a PRACH capable of transmitting a random access preamble (Msg1) (i.e., a resource for a four-step random access procedure) and configuration information for a channel capable of transmitting MsgA (i.e., a resource for a two-step random access procedure), and the PRACH resource for the four-step random access procedure and the PRACH resource among MsgA for the two-step random access procedure may be configured independently each other or configured to be shared. The configuration of sharing the PRACH resources denotes that a UE for performing the four-step random access procedure and a UE for performing the two-step random access procedure can transmit the random access preamble to the same PRACH resource. However, in this case, since the UE randomly selects the random access preamble within a predetermined configuration, a preamble index to be used may be the same or different.

Thereafter, the UE triggers a random access procedure (operation 1f-05). The triggering of the random access procedure may occur in order to transmit the CCCH for the purpose of shifting from the idle mode to the connected mode as described above, may occur for beam failure recovery, or may occur in a scenario such as handover. Here, if the base station provides the two-step random access resource and the LTE supports the two-step random access, the UE may determine whether to perform the two-step random access or the four-step random access according to a predetermined condition (operation 1f-07). That is, if the UE determines to perform two-step random access, in order to perform MsgA transmission, the PRACH and PUSCH transmission to a resource capable of transmitting MsgA is performed, and if the LTE determines to perform four-step random access, in order to perform Msg1 transmission, preamble transmission to the PRACH resource capable of transmitting Msg1 is performed. The predetermined condition may be exemplified by, for example, performing a two-step random access procedure when the strength of a received signal from the base station is greater than a threshold value indicated by the base station.

Accordingly, if the UE determines to perform four-step random access, the UE receives only Msg2 (operation 1f-21). If the base station transmits Msg2 by including the BI value therein, the PREAMBLE_BACKOFF value is determined according to the corresponding value (operation 1f-23). Thereafter, the above-described Msg3 transmission and Msg4 reception are performed (operation 1f-31), and if the random access is not successfully completed (operation 1f-33), the UE determines whether to attempt retransmission of the preamble, and after a delay time equal to the determined PREAMBLE_BACKOFF value, performs the random access preamble transmission again (operation 1f-07).

If the UE determines to perform two-step random access, the UE may receive Msg2 and/or MsgB after transmission of MsgA (operation 1f-11). This is because, as in the above example, when multiple UEs transmit MsgA, if a scenario occurs in which the base station receives only the PRACH due to collision in PUSCH transmission, the base station may response to the reception through Msg2. Accordingly, a scenario in which the base station transmits both Msg2 and MsgB may occur, and here, a scenario in which the BI is included in both Msg2 and MsgB and transmitted may also be considered. This may occur in a scenario in which the PRACH resource is shared in the four-step random access and the two-step random access. That is, in this scenario, BI transmitted through Msg2 is for UEs performing four-step random access, and BI transmitted through MsgB is for UEs performing two-step random access. Accordingly, if the LTE transmits MsgA, and then if the LTE receives both MsgB and Msg2 in response to the corresponding MsgA transmission, the UE determines the PREAMBLE_BACKOFF value according to the BI value included in MsgB (operation 1f-13). In addition, if the UE receives only Msg2, the UE configures the PREAMBLE_BACKOFF value to be 0 even if the BI is included in the message.

Thereafter, the above-described Msg3 transmission and Msg4 reception are performed (operation 1f-31) and if the random access is not successfully completed, the UE determines whether to attempt retransmission of the preamble, and after a delay time equal to the determined PREAMBLE_BACKOFF value, performs the random access preamble transmission again (operation 1f-07).

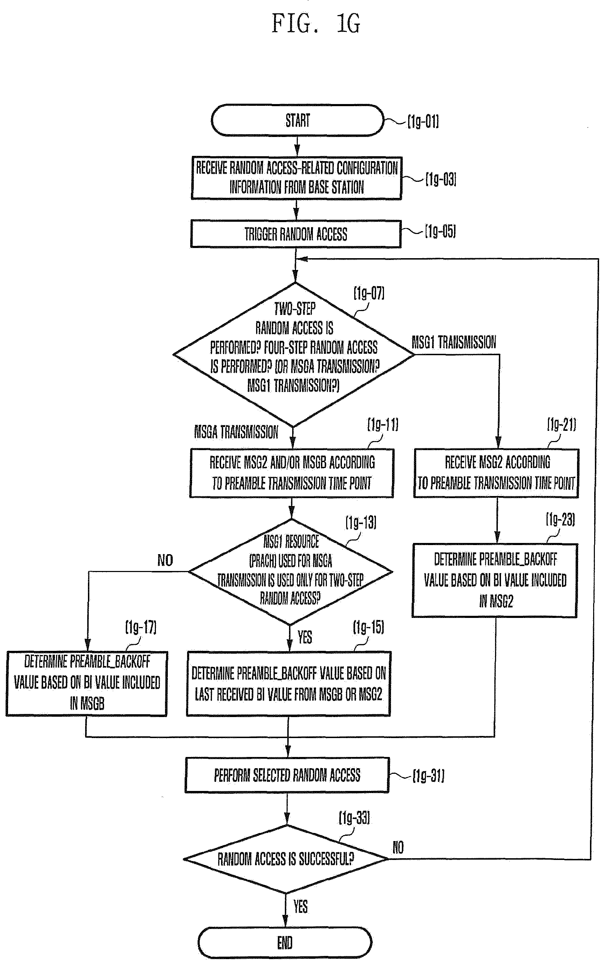

FIG. 1G illustrates embodiment 2 relating to a method for determining whether to use BI information, which is included in a message (Msg2 or MsgB), when a UE performs two-step random access according to an embodiment of the disclosure.

At operation 1g-01, the method starts. The UE receives random access related configuration information from a base station, which is currently camped on or being accessed, through an RRC layer message (operation 1g-03). The RRC layer message may be transmitted as a system information message (SIB) that the base station broadcasts to all UEs in a cell, or may be transmitted, in connection with connected LTEs, only to the corresponding UE through an RRCReconfiguration message. The random access-related configuration information includes configuration information for a PRACH capable of transmitting a random access preamble (Msg1) (i.e., a resource for a four-step random access procedure), configuration information for a channel capable of transmitting MsgA (i.e., a resource for a two-step random access procedure), and the like, wherein the PRACH resource for the four-step random access procedure and the PRACH resource among MsgA for the two-step random access procedure may be configured independently each other or configured to be shared. The configuration of sharing the PRACH resources denotes that a UE for performing the four-step random access procedure and a UE for performing the two-step random access procedure can transmit the random access preamble to the same PRACH resource. However, in this case, since the UE randomly selects the random access preamble within a predetermined configuration, the used preamble index may be the same or different.

Thereafter, the UE triggers a random access procedure (operation 1g-05). The triggering of the random access procedure may occur in order to transmit the CCCH for the purpose of shifting from the idle mode to the connected mode as described above, may occur for beam failure recovery, or may occur in a scenario such as handover. Here, if the base station provides the two-step random access resource and the LTE supports the two-step random access, the UE may determine whether to perform the two-step random access or the four-step random access according to a predetermined condition (operation 1g-07). That is, if the UE determines to perform two-step random access, the PRACH and PUSCH transmission to a resource capable of transmitting MsgA is performed for MsgA transmission, and if the UE determines to perform four-step random access, preamble transmission to the PRACH resource capable of transmitting Msg1 is performed for Msg1 transmission. The predetermined condition may be exemplified by, for example, performing a two-step random access procedure when the strength of a received signal from the base station is greater than a threshold value indicated by the base station.

Accordingly, if the UE determines to perform four-step random access, the UE receives only Msg2 (operation 1g-21). If the base station transmits Msg2 by including the BI value therein, the PREAMBLE_BACKOFF value is determined according to the corresponding value (operation 1g-23). Thereafter, the above-described Msg3 transmission and Msg4 reception are performed (operation 1g-31), and if the random access is not successfully completed (operation 1g-33), the UE determines whether to attempt retransmission of the preamble, and after a delay time equal to the determined PREAMBLE _BACKOFF value, performs the random access preamble transmission again (operation 1g-07).

If the UE determines to perform two-step random access, the UE may receive Msg2 and/or MsgB after transmission of MsgA (operation 1g-11). This is because, as in the above example, when multiple UEs transmit MsgA, if a scenario occurs in which the base station receives only the PRACH due to collision in PUSCH transmission, the base station may response to the reception through Msg2. Accordingly, a scenario in which the base station transmits both Msg2 and MsgB may occur, and here, a scenario in which the BI is included in both Msg2 and MsgB and transmitted may also be considered. This may occur in a scenario in which the PRACH resource is shared in the four-step random access and the two-step random access. Accordingly, if the PRACH resource is shared in the four-step random access procedure and the two-step random access procedure, the Msg2 response is transmitted to both the UE that has performed the two-step random access and the UE that has performed the four-step random access. Thus, if the base station wants to transmit the BI value to the UE that has performed the two-step random access, the BI value transmission is performed through MsgB, and even if the UE receives both Msg2 and MsgB, the PREAMBLE _BACKOFF value is determined according to the BI value included in MsgB (operation 1g-17). In addition, if the UE receives only Msg2, the UE configures the PREAMBLE _BACKOFF value to be 0 even if the BI is included in the message.

However, if the PRACH resource is not shared in the four-step random access procedure and the two-step random access procedure and is configured only for the two-step random access, both Msg2 and MsgB with respect to transmission of the corresponding MsgA are used for UEs that have performed the two-step random access. Therefore, the UE determines the PREAMBLE _BACKOFF value according to the last received BI value from either Msg2 or MsgB (operation 1g-15).

Thereafter, the above-described Msg3 transmission and Msg4 reception are performed (operation 1g-31), and if the random access is not successfully completed, the UE determines whether to attempt retransmission of the preamble, and after a delay time equal to the determined PREAMBLE_BACKOFF value, performs the random access preamble transmission again (operation 1g-07).

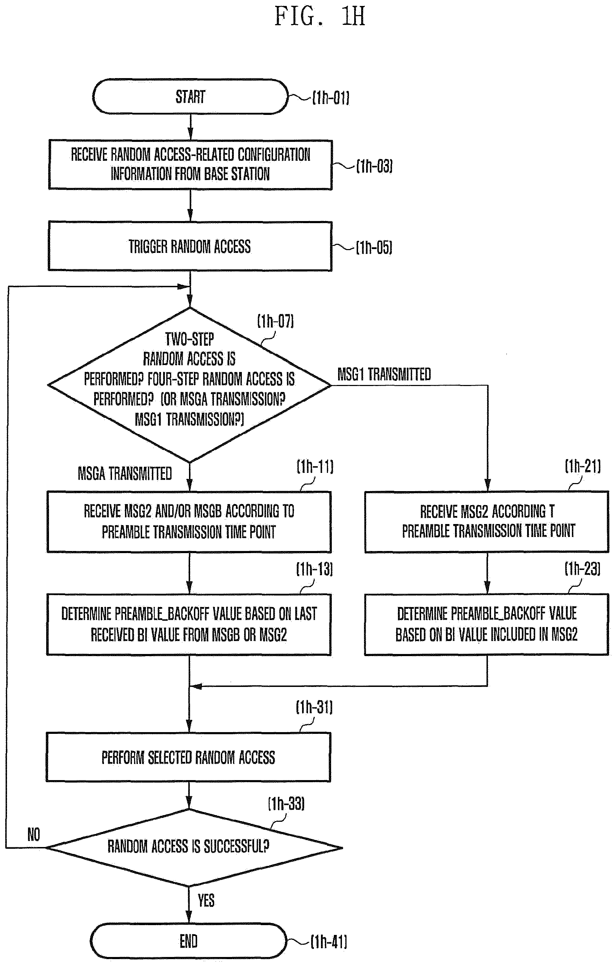

FIG. 1H illustrates embodiment 3 relating to a method for determining whether to use BI information, which is included in a message (Msg2 or MsgB), when a UE performs two-step random access according to an embodiment of the disclosure.

At operation 1h-01, the method starts. The UE receives random access related configuration information from a base station, which is currently camped on or being accessed, through an RRC layer message (operation 1h-03). The RRC layer message may be transmitted as a system information message (SIB) that the base station broadcasts to all UEs in a cell, or may be transmitted, in connection with connected LTEs, only to the corresponding UE through an RRCReconfiguration message. The random access-related configuration information includes configuration information for a PRACH capable of transmitting a random access preamble (Msg1) (i.e., a resource for a four-step random access procedure), configuration information for a channel capable of transmitting MsgA (i.e., a resource for a two-step random access procedure), and the like, wherein the PRACH resource for the four-step random access procedure and the PRACH resource among MsgA for the two-step random access procedure may be configured independently each other or configured to be shared. The configuration of sharing the PRACH resources denotes that a UE for performing the four-step random access procedure and a UE for performing the two-step random access procedure can transmit the random access preamble to the same PRACH resource. However, in this case, since the UE randomly selects the random access preamble within a predetermined configuration, the used preamble index may be the same or different.

Thereafter, the UE triggers a random access procedure (operation 1h-05). The triggering of the random access procedure may occur in order to transmit the CCCH for the purpose of shifting from the idle mode to the connected mode as described above, may occur for beam failure recovery, or may occur in a scenario such as handover. Here, if the base station provides the two-step random access resource and the LTE supports the two-step random access, the UE may determine whether to perform the two-step random access or the four-step random access according to a predetermined condition (operation 1h-07). That is, if the UE determines to perform two-step random access, the PRACH and PUSCH transmission to a resource capable of transmitting MsgA is performed for MsgA transmission, and if the UE determines to perform four-step random access, preamble transmission to the PRACH resource capable of transmitting Msg1 is performed for Msg1 transmission. The predetermined condition may be exemplified by, for example, performing a two-step random access procedure when the strength of a received signal from the base station is greater than a threshold value indicated by the base station.

Accordingly, if the UE determines to perform four-step random access, the UE receives only Msg2 (operation 1h-21). If the base station transmits Msg2 by including the BI value therein, the PREAMBLE_BACKOFF value is determined according to the corresponding value (operation 1h-23). Thereafter, the above-described Msg3 transmission and Msg4 reception are performed (operation 1h-31), and if the random access is not successfully completed, the UE determines whether to attempt retransmission of the preamble, and after a delay time equal to the determined PREAMBLE _BACKOFF value, performs the random access preamble transmission again (operation 1h-07).

If the UE determines to perform two-step random access, the UE may receive Msg2 and/or MsgB after transmission of MsgA (operation 1h-11). This is because, as in the above example, when multiple UEs transmit MsgA, if a scenario occurs in which the base station receives only the PRACH due to collision in PUSCH transmission, the base station may response to the reception through Msg2. Accordingly, a scenario in which the base station transmits both Msg2 and MsgB may occur, and here, a scenario in which the BI is included in both Msg2 and MsgB and transmitted may also be considered. Accordingly, if the UE transmits MsgA, and then if the UE receives both MsgB and Msg2 in response to the corresponding MsgA transmission, the UE determines the PREAMBLE _BACKOFF value according to the last received BI value from either Msg2 or MsgB (operation 1h-13). Here, it is assumed that the base station configures the BI values, which are included in Msg2 and MsgB transmitted in response to the corresponding MsgA transmission, to be identical value, and transmits the same.

Thereafter, the above-described Msg3 transmission and Msg4 reception are performed (operation 1h-31), and if the random access is not successfully completed (operation 1h-33), the UE determines whether to attempt retransmission of the preamble, and after a delay time equal to the determined PREAMBLE _BACKOFF value, performs the random access preamble transmission again (operation 1h-07). The method ends at operation 1h-41.

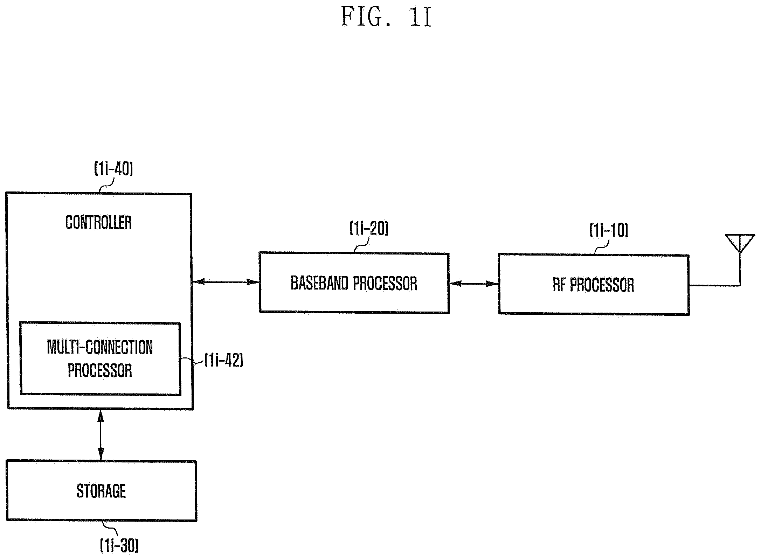

FIG. 1I illustrates a block configuration of a UE according to the disclosure.

Referring to FIG. 1I, the UE includes a radio frequency (RF) processor 1i-10, a baseband processor 1i-20, a storage 1i-30, and a controller 1i-40.

The RF processor 1i-10 performs functions for transmission/reception of signals through a wireless channel, such as signal band conversion, amplification, and the like. That is, the RF processor 1i-10 up-converts a baseband signal provided from the baseband processor 1i-20 into an RF band signal, transmits the same through an antenna, and down-converts an RF band signal received through the antenna into a baseband signal. For example, the RF processor 1i-10 may include a transmission filter, a reception filter, an amplifier, a mixer, an oscillator, a digital-to-analog converter (DAC), an analog-to-digital converter (ADC), and the like. Although only one antenna is illustrated in FIG. 1I, the UE may include multiple antennas. In addition, the RF processor 1i-10 may include multiple RF chains. Moreover, the RF processor 1i-10 may perform beamforming. For the sake of the beamforming, the RF processor 1i-10 may adjust the phase and magnitude of each of signals transmitted/received through multiple antennas or antenna elements.

The baseband processor 1i-20 performs a function of conversion between a baseband signal and a bit string according to the physical layer specification of the system. For example, during data transmission, the baseband processor 1i-20 encodes and modulates a transmission bit string, thereby generating complex symbols. In addition, during data reception, the baseband processor 1i-20 demodulates and decodes a baseband signal provided from the RF processor 1i-10, thereby reconstructing a reception bit string. For example, when an orthogonal frequency division multiplexing (OFDM) scheme is followed, during data transmission, the baseband processor 1i-20 encodes and modulates a transmission bit string so as to generate complex symbols, maps the complex symbols to subcarriers, and then configures OFDM symbols through an inverse fast Fourier transform (IFFT) operation and cyclic prefix (CP) insertion. In addition, during data reception, the baseband processor 1i-20 divides a baseband signal provided from the RF processor 1i-10 in units of OFDM symbols, reconstructs the signals mapped to subcarriers, through a fast Fourier transform (FFT) operation, and then reconstructs the reception bit string through demodulation and decoding.

The baseband processor 1i-20 and the RF processor 1i-10 transmit or receive signals as described above. Accordingly, the baseband processor 1i-20 and the RF processor 1i-10 may be referred to as transmitter, receiver, transceiver, or communication units. In addition, at least one of the baseband processor 1i-20 and the RF processor 1i-10 may include multiple communication modules in order to support multiple different radio access technologies. Furthermore, at least one of the baseband processor 1i-20 and the RF processor 1i-10 may include different communication modules in order to process signals in different frequency bands. For example, the different radio access technologies may include a wireless LAN (for example, IEEE 802.11), a cellular network (for example, LTE), and the like. In addition, the different frequency bands may include a super high frequency (SHF) (for example, 2.5 GHz, 5 GHz) band and a millimeter wave (for example, 60 GHz) band.

The storage 1i-30 stores data for operation of the UE, such as a basic program, an application program, and configuration information. Particularly, the storage 1i-30 may store information regarding a wireless LAN node configured to perform wireless communication by using a wireless LAN access technology. In addition, the storage 1i-30 provides stored data at a request of the controller 1i-40.

The controller 1i-40 controls the overall operations of the UE. For example, the controller 1i-40 transmits/receives signals through the baseband processor 1i-20 and the RF processor 1i-10. In addition, the controller 1i-40 records and reads data in and from the storage 1i-30. To this end, the controller 1i-40 may include at least one processor. For example, the controller 1i-40 may include a communication processor (CP) configured to perform control for communication, and an application processor (AP) configured to control the higher layer, such as an application program. According to an embodiment of the disclosure, the controller 1i-40 includes a multi-connection processor 1i-42 configured to perform processing for operating in a multi-connection mode. For example, the controller 1i-40 may control the UE so as to perform the procedure of operations of the UE illustrated in FIG. 1E.

The controller 1i-40 according to an embodiment of the disclosure determines, if two-step random access is triggered, whether to use the BI which has been received from a message, from among the received BI values, and thus determines the BI value to be used at the time of retransmission of MsgA or Msg1.

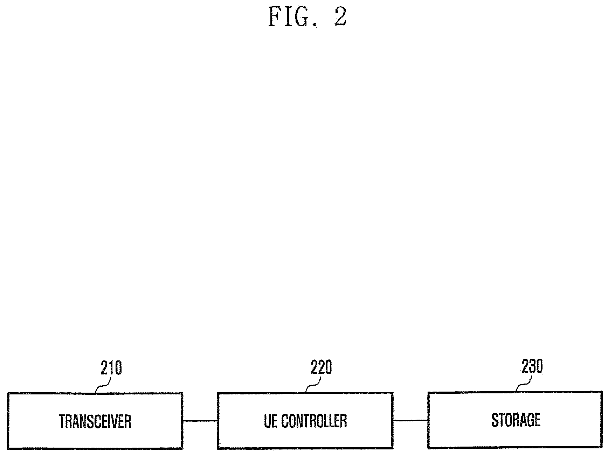

FIG. 2 illustrates the structure of a UE according to an embodiment of the disclosure.

Referring to FIG. 2, the UE may include a transceiver 210, a controller 220, and a storage 230. In the disclosure, the controller may be defined as a circuit, an application-specific integrated circuit, or at least one processor.

The transceiver 210 may transmit or receive a signal to or from another network. The transceiver 210 may receive system information, for example, from a base station, and may receive a synchronization signal or reference signal.

The controller 220 may control the overall operation of the UE according to an embodiment proposed in the disclosure. For example, the controller 220 may control signal flow between blocks to perform an operation according to the procedures described above by referring to FIGS. 1A to 1I. For example, the controller 220 may perform a method of applying the backoff when using the two-step random access according to the embodiment of the disclosure.

The storage 230 may store at least one of information transmitted or received through the transceiver 210 and information generated through the controller 220. For example, the storage 230 may store information required to use the two-step random access according to the above-described embodiment.

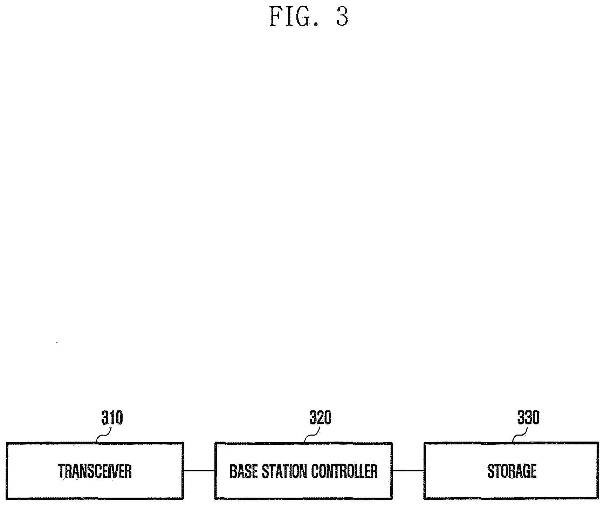

FIG. 3 illustrates the structure of a base station according to an embodiment of the disclosure.

Referring to FIG. 3, the base station may include a transceiver 310, a controller 320, and a storage 330. In the disclosure, the controller may be defined as a circuit, an application-specific integrated circuit, or at least one processor.

The transceiver 310 may transmit or receive a signal to or from another network. The transceiver 310 may transmit system information, for example, to a UE, and may transmit a synchronization signal or reference signal.

The controller 320 may control the overall operation of the base station according to an embodiment proposed in the disclosure. For example, the controller 320 may control signal flow between blocks to perform an operation according to the procedures described above by referring to FIGS. 1A to 1I. Specifically, the controller 320 may perform a method of applying the backoff when using the two-step random access according to the embodiment of the disclosure.

The storage 330 may store at least one of information transmitted or received through the transceiver 310 and information generated through the controller 320. For example, the storage 330 may store information required to use the two-step random access according to the above-described embodiment.

Methods disclosed in the claims and/or methods according to various embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

**Claims**

1. A method for random access by a terminal in a wireless communication system, the method comprising:

   receiving, from a base station, a threshold value related to determination of a random access type and random access-related information;
   determining the random access type as one of a two-step random access type and a four-step random access type based on the threshold value and a strength of a reception signal received from the base station;
   transmitting, to the base station, a signal related to a first preamble for random access based on the determined random access type and the random access-related information, wherein the signal related to the first preamble for random access is transmitted based on a common resource for the two-step random access type and the four-step random access type;
   in case that the determined random access type is the two-step random access type, identifying, among a message B, Msg B, according to the two-step random access type and a message 2, Msg 2, according to the four-step random access type, a backoff indicator included in the Msg B;
   in case that the determined random access type is the four-step random access type, identifying, among the Msg B and the Msg 2, a backoff indicator included in the Msg 2; and
   transmitting, to the base station, a signal related to a second preamble based on the identified backoff indicator.

2. The method of claim 1, wherein transmitting the signal related to the second preamble comprises:

   transmitting, to the base station, the signal related to the second preamble after a backoff time corresponding to the backoff indicator included in the Msg B, in case that the determined random access type is the two-step random access type; and
   transmitting, to the base station, the signal related to the second preamble after a backoff time corresponding to the backoff indicator included in the Msg 2, in case that the determined random access type is the four-step random access type.

3. The method of claim 1, wherein the signal related to the first preamble is a message A, Msg A, including a preamble and a radio resource control, RRC, request message in a case of the two-step random access type, and
   wherein the signal related to the first preamble is a message 1, Msg 1, in a case of the four-step random access type.

4. The method of claim 1, wherein determining the random access type comprises:
   determining the random access type as the two-step random access type in case that the strength of the reception signal is greater than or equal to the threshold value, and determining the random access type as the four-step random access type in case that the strength of the reception signal is less than the threshold value.

5. The method of claim 1, wherein the Msg 2 includes response information on random access, and the Msg B includes response information on random access and contention resolution-related information.

6. A method for random access by a base station in a wireless communication system, the method comprising:

transmitting, to a terminal, a threshold value related to determination of a random access type and random access-related information;
receiving, from the terminal, a signal related to a first preamble for random access according to the random access-related information, wherein the signal related to the first preamble for random access is received with only a preamble;
in case that the signal related to the first preamble for random access is received based on a common resource for a two-step random access type and a four-step random access type, transmitting, to the terminal, a message B, Msg B, according to the two-step random access type including a backoff indicator and a message 2, Msg 2, according to the four-step random access type including a backoff indicator, in response to the signal related to the first preamble; and
receiving, from the terminal, a signal related to a second preamble,
wherein in case that the signal related to the first preamble is for the two-step random access, the backoff indicator included in the Msg B is applied for the signal related to the second preamble, and
wherein in case that the signal related to the first preamble is for the four-step random access, the backoff indicator included in the Msg 2 is applied for the signal related to the second preamble.

7. The method of claim 6, wherein the Msg 2 includes response information on random access, and the Msg B includes response information on random access and contention resolution-related information.

8. The method of claim 6, wherein in case that the signal related to the first preamble is for the two-step random access, the signal related to the second preamble is received after a backoff time corresponding to the backoff indicator included in the Msg B, and
wherein in case that the signal related to the first preamble is for the four-step random access, the signal related to the second preamble is received after a backoff time corresponding to the backoff indicator included in the Msg 2.

9. A terminal in a wireless communication system, the terminal comprising:

a transceiver; and
a controller configured to:

receive, from a base station via the transceiver, a threshold value related to determination of a random access type and random access-related information,
determine the random access type as one of a two-step random access type and a four-step random access type based on the threshold value and a strength of a reception signal received from the base station,
transmit, to the base station via the transceiver, a signal related to a first preamble for random access based on the determined random access type and the random access-related information, wherein the signal related to the first preamble for random access is transmitted based on a common resource for the two-step random access type and the four-step random access type,
in case that the determined random access type is the two-step random access type, identify, among a message B, Msg B, according to the two-step random access type and a message 2, Msg 2, according to the four-step random access type, a backoff indicator included in the Msg B,
in case that the determined random access type is the four-step random access type, identify, among the Msg B and the Msg 2, a backoff indicator included in the Msg 2, and
transmit, to the base station via the transceiver, a signal related to a second preamble based on the identified backoff indicator.

10. The terminal of claim 9, wherein the controller is configured to:

transmit, to the base station via the transceiver, the signal related to the second preamble after a backoff time corresponding to the backoff indicator included in the Msg B, in case that the determined random access type is the two-step random access type, and
transmit, to the base station via the transceiver, the signal related to the second preamble after a backoff time corresponding to the backoff indicator included in the Msg 2, in case that the determined random access type is the four-step random access type.

**11.** The terminal of claim 9, wherein the signal related to the first preamble is a message A, Msg A, including a preamble and a radio resource control, RRC, request message in a case of the two-step random access type, and wherein the signal related to the first preamble is a message 1, Msg 1, in a case of the four-step random access type.

**12.** The terminal of claim 9, wherein the controller is configured to determine the random access type as the two-step random access type in case that the strength of the reception signal is greater than or equal to the threshold value, and to determine the random access type as the four-step random access type in case that the strength of the reception signal is less than the threshold value.

**13.** The terminal of claim 9, wherein the Msg 2 includes response information on random access, and the Msg B includes response information on random access and contention resolution-related information.

**14.** A base station in a wireless communication system, the base station comprising:

a transceiver; and
a controller configured to:

transmit, to a terminal via the transceiver, a threshold value related to determination of a random access type and random access-related information,
receive, from the terminal via the transceiver, a signal related to a first preamble for random access according to the random access-related information, wherein the signal related to the first preamble for random access is received with only a preamble,
in case that the signal related to the first preamble for random access is received based on a common resource for a two-step random access type and a four-step random access type, transmit, to the terminal via the transceiver, a message B, Msg B, according to the two-step random access type including a backoff indicator and a message 2, Msg 2, according to the four-step random access type including a backoff indicator, in response to the signal related to the first preamble, and
receive, from the terminal via the transceiver, a signal related to a second preamble,

wherein in case that the signal related to the first preamble is for the two-step random access, the backoff indicator included in the Msg B is applied for the signal related to the second preamble, and
wherein in case that the signal related to the first preamble is for the four-step random access, the backoff indicator included in the Msg 2 is applied for the signal related to the second preamble.

**15.** The base station of claim 14, wherein the Msg 2 includes response information on random access, and the Msg B includes response information on random access and contention resolution-related information,

wherein in case that the signal related to the first preamble is for the two-step random access, the signal related to the second preamble is received after a backoff time corresponding to the backoff indicator included in the Msg B, and
wherein in case that the signal related to the first preamble is for the four-step random access, the signal related to the second preamble is received after a backoff time corresponding to the backoff indicator included in the Msg 2.

**Patentansprüche**

**1.** Verfahren für Zufallszugriff durch ein Endgerät in einem drahtlosen Kommunikationssystem, wobei das Verfahren Folgendes umfasst:

Empfangen, von einer Basisstation, eines Schwellenwerts, der sich auf die Bestimmung eines Zufallszugriffstyps bezieht, und von zufallszugriffsbezogenen Informationen;
Bestimmen des Zufallszugriffstyps als einen von einem zweistufigen Zufallszugriffstyp und einem vierstufigen Zufallszugriffstyp basierend auf dem Schwellenwert und einer Stärke eines von der Basisstation empfangenen Empfangssignals;
Übertragen, an die Basisstation, eines Signals, das sich auf eine erste Präambel für den Zufallszugriff bezieht, basierend auf dem bestimmten Zufallszugriffstyp und den zufallszugriffsbezogenen Informationen, wobei das Signal, das sich auf die erste Präambel für den Zufallszugriff bezieht, basierend auf einer gemeinsamen Ressource für den zweistufigen Zufallszugriffstyp und den vierstufigen Zufallszugriffstyp übertragen wird;

falls der bestimmte Zufallszugriffstyp der zweistufige Zufallszugriffstyp ist, Identifizieren, aus einer Nachricht B, Msg B, gemäß dem zweistufigen Zufallszugriffstyp und einer Nachricht 2, Msg 2, gemäß dem vierstufigen Zufallszugriffstyp, eines in der Msg B enthaltenen Backoff-Indikators;

falls der bestimmte Zufallszugriffstyp der vierstufige Zufallszugriffstyp ist, Identifizieren, aus der Msg B und der Msg 2, eines in der Msg 2 enthaltenen Backoff-Indikators; und

Übertragen, an die Basisstation, eines Signals, das sich auf eine zweite Präambel bezieht, basierend auf dem identifizierten Backoff-Indikator.

2. Verfahren nach Anspruch 1, wobei das Übertragen des Signals, das sich auf die zweite Präambel bezieht, Folgendes umfasst:

Übertragen, an die Basisstation, des Signals, das sich auf die zweite Präambel bezieht, nach einer Backoff-Zeit, die dem in der Msg B enthaltenen Backoff-Indikator entspricht, falls der bestimmte Zufallszugriffstyp der zweistufige Zufallszugriffstyp ist; und

Übertragen, an die Basisstation, des Signals, das sich auf die zweite Präambel bezieht, nach einer Backoff-Zeit, die dem in der Msg 2 enthaltenen Backoff-Indikator entspricht, falls der bestimmte Zufallszugriffstyp der vierstufige Zufallszugriffstyp ist.

3. Verfahren nach Anspruch 1, wobei das Signal, das sich auf die erste Präambel bezieht, eine Nachricht A, Msg A, die eine Präambel und eine Funkressourcensteuerungsanforderungsnachricht, RRC-Anforderungsnachricht beinhaltet, in einem Fall des zweistufigen Zufallszugriffstyps ist, und

wobei das Signal, das sich auf die erste Präambel bezieht, eine Nachricht 1, Msg 1, in einem Fall des vierstufigen Zufallszugriffstyps ist.

4. Verfahren nach Anspruch 1, wobei das Bestimmen des Zufallszugriffstyps Folgendes umfasst:

Bestimmen des Zufallszugriffstyps als den zweistufigen Zufallszugriffstyp, falls die Stärke des Empfangssignals größer oder gleich dem Schwellenwert ist, und Bestimmen des Zufallszugriffstyps als den vierstufigen Zufallszugriffstyp, falls die Stärke des Empfangssignals kleiner als der Schwellenwert ist.

5. Verfahren nach Anspruch 1, wobei die Msg 2 Antwortinformationen über den Zufallszugriff beinhaltet und die Msg B Antwortinformationen über den Zufallszugriff und konfliktauflösungsbezogene Informationen beinhaltet.

6. Verfahren für Zufallszugriff durch eine Basisstation in einem drahtlosen Kommunikationssystem, wobei das Verfahren Folgendes umfasst:

Übertragen, an ein Endgerät, eines Schwellenwerts, der sich auf die Bestimmung eines Zufallszugriffstyps bezieht, und von zufallszugriffsbezogenen Informationen;

Empfangen, von dem Endgerät, eines Signals, das sich auf eine erste Präambel für den Zufallszugriff bezieht, gemäß den zufallszugriffsbezogenen Informationen, wobei das Signal, das sich auf die erste Präambel für den Zufallszugriff bezieht, nur mit einer Präambel empfangen wird;

falls das Signal, das sich auf die erste Präambel für den Zufallszugriff bezieht, basierend auf einer gemeinsamen Ressource für einen zweistufigen Zufallszugriffstyp und einen vierstufigen Zufallszugriffstyp empfangen wird, Übertragen, an das Endgerät, einer Nachricht B, Msg B, gemäß dem zweistufigen Zufallszugriffstyp, die einen Backoff-Indikator enthält, und einer Nachricht 2, Msg 2, gemäß dem vierstufigen Zufallszugriffstyp, die einen Backoff-Indikator enthält, als Reaktion auf das Signal, das sich auf die erste Präambel bezieht; und

Empfangen, von dem Endgerät, eines Signals, das sich auf eine zweite Präambel bezieht,

wobei, falls das Signal, das sich auf die erste Präambel bezieht, für den zweistufigen Zufallszugriff ist, der in der Msg B enthaltene Backoff-Indikator für das Signal, das sich auf die zweite Präambel bezieht, angewendet wird, und

wobei, falls das Signal, das sich auf die erste Präambel bezieht, für den vierstufigen Zufallszugriff ist, der in der Msg 2 enthaltene Backoff-Indikator für das Signal, das sich auf die zweite Präambel bezieht, angewendet wird.

7. Verfahren nach Anspruch 6, wobei die Msg 2 Antwortinformationen über den Zufallszugriff beinhaltet und die Msg B Antwortinformationen über den Zufallszugriff und konfliktauflösungsbezogene Informationen beinhaltet.

8. Verfahren nach Anspruch 6, wobei, falls das Signal, das sich auf die erste Präambel bezieht, für den zweistufigen Zufallszugriff ist, das Signal, das sich auf die zweite Präambel bezieht, nach einer Backoff-Zeit empfangen wird, die dem in der Msg B enthaltenen Backoff-Indikator entspricht, und

wobei, falls das Signal, das sich auf die erste Präambel bezieht, für den vierstufigen Zufallszugriff ist, das Signal, das sich auf die zweite Präambel bezieht, nach einer Backoff-Zeit empfangen wird, die dem in der Msg 2 enthaltenen Backoff-Indikator entspricht.

9. Endgerät in einem drahtlosen Kommunikationssystems, wobei das Endgerät Folgendes umfasst:

einen Transceiver; und
eine Steuerung, die konfiguriert ist zum:

Empfangen, von einer Basisstation über den Transceiver, eines Schwellenwerts, der sich auf die Bestimmung eines Zufallszugriffstyps bezieht, und von zufallszugriffsbezogenen Informationen,

Bestimmen des Zufallszugriffstyps als einen von einem zweistufigen Zufallszugriffstyp und einem vierstufigen Zufallszugriffstyp basierend auf dem Schwellenwert und einer Stärke eines von der Basisstation empfangenen Empfangssignals,

Übertragen, an die Basisstation über den Transceiver, eines Signals, das sich auf eine erste Präambel für den Zufallszugriff bezieht, basierend auf dem bestimmten Zufallszugriffstyp und den zufallszugriffsbezogenen Informationen, wobei das Signal, das sich auf die erste Präambel für den Zufallszugriff bezieht, basierend auf einer gemeinsamen Ressource für den zweistufigen Zufallszugriffstyp und den vierstufigen Zufallszugriffstyp übertragen wird,

falls der bestimmte Zufallszugriffstyp der zweistufige Zufallszugriffstyp ist, Identifizieren, aus einer Nachricht B, Msg B, gemäß dem zweistufigen Zufallszugriffstyp und einer Nachricht 2, Msg 2, gemäß dem vierstufigen Zufallszugriffstyp, eines in der Msg B enthaltenen Backoff-Indikators,

falls der bestimmte Zufallszugriffstyp der vierstufige Zufallszugriffstyp ist, Identifizieren, aus der Msg B und der Msg 2, eines in der Msg 2 enthaltenen Backoff-Indikators, und

Übertragen, an die Basisstation über den Transceiver, eines Signals, das sich auf eine zweite Präambel bezieht, basierend auf dem identifizierten Backoff-Indikator.

10. Endgerät nach Anspruch 9, wobei die Steuerung konfiguriert ist zum:

Übertragen, an die Basisstation über den Transceiver, des Signals, das sich auf die zweite Präambel bezieht, nach einer Backoff-Zeit, die dem in der Msg B enthaltenen Backoff-Indikator entspricht, falls der bestimmte Zufallszugriffstyp der zweistufige Zufallszugriffstyp ist, und

Übertragen, an die Basisstation über den Transceiver, des Signals, das sich auf die zweite Präambel bezieht, nach einer Backoff-Zeit, die dem in der Msg 2 enthaltenen Backoff-Indikator entspricht, falls der bestimmte Zufallszugriffstyp der vierstufige Zufallszugriffstyp ist.

11. Endgerät nach Anspruch 9, wobei das Signal, das sich auf die erste Präambel bezieht, eine Nachricht A, Msg A, die eine Präambel und eine Funkressourcensteuerungsanforderungsnachricht, RRC-Anforderungsnachricht beinhaltet, in einem Fall des zweistufigen Zufallszugriffstyps ist, und

wobei das Signal, das sich auf die erste Präambel bezieht, eine Nachricht 1, Msg 1, in einem Fall des vierstufigen Zufallszugriffstyps ist.

12. Endgerät nach Anspruch 9, wobei die Steuerung konfiguriert ist zum Bestimmen des Zufallszugriffstyps als den zweistufigen Zufallszugriffstyp, falls die Stärke des Empfangssignals größer oder gleich dem Schwellenwert ist, und zum Bestimmen des Zufallszugriffstyps als den vierstufigen Zufallszugriffstyp, falls die Stärke des Empfangssignals kleiner als der Schwellenwert ist.

13. Endgerät nach Anspruch 9, wobei die Msg 2 Antwortinformationen über den Zufallszugriff beinhaltet und die Msg B Antwortinformationen über den Zufallszugriff und konfliktauflösungsbezogene Informationen beinhaltet.

14. Basisstation in einem drahtlosen Kommunikationssystem, wobei die Basisstation Folgendes umfasst:

einen Transceiver; und
eine Steuerung, die konfiguriert ist zum:

Übertragen, an ein Endgerät über den Transceiver, eines Schwellenwerts, der sich auf die Bestimmung eines Zufallszugriffstyps bezieht, und von zufallszugriffsbezogenen Informationen,

Empfangen, von dem Endgerät über den Transceiver, eines Signals, das sich auf eine erste Präambel für den Zufallszugriff bezieht, gemäß den zufallszugriffsbezogenen Informationen, wobei das Signal, das sich auf die erste Präambel für den Zufallszugriff bezieht, nur mit einer Präambel empfangen wird, falls das Signal, das sich auf die erste Präambel für den Zufallszugriff bezieht, basierend auf einer gemeinsamen Ressource für einen zweistufigen Zufallszugriffstyp und einen vierstufigen Zufallszugriffstyp empfangen wird, Übertragen, an das Endgerät über den Transceiver, einer Nachricht B, Msg B, gemäß dem zweistufigen Zufallszugriffstyp, die einen Backoff-Indikator enthält, und einer Nachricht 2, Msg 2, gemäß dem vierstufigen Zufallszugriffstyp, die einen Backoff-Indikator enthält, als Reaktion auf das Signal, das sich auf die erste Präambel bezieht, und

Empfangen, von dem Endgerät über den Transceiver, eines Signals, das sich auf eine zweite Präambel bezieht,

wobei, falls das Signal, das sich auf die erste Präambel bezieht, für den zweistufigen Zufallszugriff ist, der in der Msg B enthaltene Backoff-Indikator für das Signal, das sich auf die zweite Präambel bezieht, angewendet wird, und

wobei, falls das Signal, das sich auf die erste Präambel bezieht, für den vierstufigen Zufallszugriff ist, der in der Msg 2 enthaltene Backoff-Indikator für das Signal, das sich auf die zweite Präambel bezieht, angewendet wird.

15. Basisstation nach Anspruch 14, wobei die Msg 2 Antwortinformationen über den Zufallszugriff beinhaltet und die Msg B Antwortinformationen über den Zufallszugriff und konfliktauflösungsbezogene Informationen beinhaltet,

wobei, falls das Signal, das sich auf die erste Präambel bezieht, für den zweistufigen Zufallszugriff ist, das Signal, das sich auf die zweite Präambel bezieht, nach einer Backoff-Zeit empfangen wird, die dem in der Msg B enthaltenen Backoff-Indikator entspricht, und

wobei, falls das Signal, das sich auf die erste Präambel bezieht, für den vierstufigen Zufallszugriff ist, das Signal, das sich auf die zweite Präambel bezieht, nach einer Backoff-Zeit empfangen wird, die dem in der Msg 2 enthaltenen Backoff-Indikator entspricht.

**Revendications**

1. Procédé d'accès aléatoire par un terminal dans un système de communication sans fil, le procédé comprenant :

recevoir, d'une station de base, une valeur seuil liée à la détermination d'un type d'accès aléatoire et d'informations relatives à l'accès aléatoire ;
déterminer le type d'accès aléatoire comme étant un d'un type d'accès aléatoire à deux étapes et d'un type d'accès aléatoire à quatre étapes sur la base de la valeur seuil et de l'intensité d'un signal de réception reçu de la station de base ;
transmettre, à la station de base, un signal lié à un premier préambule d'accès aléatoire sur la base du type d'accès aléatoire déterminé et des informations relatives à l'accès aléatoire, le signal lié au premier préambule d'accès aléatoire étant transmis sur la base d'une ressource commune pour le type d'accès aléatoire à deux étapes et le type d'accès aléatoire à quatre étapes ;
dans le cas où le type d'accès aléatoire déterminé est le type d'accès aléatoire à deux étapes, identifier, parmi un message B, Msg B, selon le type d'accès aléatoire à deux étapes et un message 2, Msg 2, selon le type d'accès aléatoire à quatre étapes, un indicateur de temporisation inclus dans le Msg B ;
dans le cas où le type d'accès aléatoire déterminé est le type d'accès aléatoire à quatre étapes, identifier, parmi le Msg B et le Msg 2, un indicateur de temporisation inclus dans le Msg 2 ; et
transmettre, à la station de base, un signal lié à un deuxième préambule sur la base de l'indicateur de temporisation identifié.

2. Procédé de la revendication 1, dans lequel la transmission du signal lié au deuxième préambule comprend :

transmettre, à la station de base, le signal lié au deuxième préambule après un temps de temporisation correspondant à l'indicateur de temporisation inclus dans le Msg B, dans le cas où le type d'accès aléatoire déterminé est le type d'accès aléatoire à deux étapes ; et
transmettre, à la station de base, le signal lié au deuxième préambule après un temps de temporisation correspondant à l'indicateur de temporisation inclus dans le Msg 2, dans le cas où le type d'accès aléatoire déterminé est le type d'accès aléatoire à quatre étapes.

**3.** Procédé de la revendication 1, dans lequel le signal lié au premier préambule est un message A, Msg A, comprenant un préambule et un message de demande de commande de ressources radio, RRC, dans un cas du type d'accès aléatoire à deux étapes, et
dans lequel le signal lié au premier préambule est un message 1, Msg 1, dans le cas du type d'accès aléatoire à quatre étapes.

**4.** Procédé de la revendication 1, dans lequel la détermination du type d'accès aléatoire comprend :
déterminer le type d'accès aléatoire comme étant le type d'accès aléatoire à deux étapes si l'intensité du signal de réception est supérieure ou égale à la valeur seuil, et déterminer le type d'accès aléatoire comme étant le type d'accès aléatoire à quatre étapes si l'intensité du signal de réception est inférieure à la valeur seuil.

**5.** Procédé de la revendication 1, dans lequel le Msg 2 comprend des informations de réponse sur l'accès aléatoire, et le Msg B comprend des informations de réponse sur l'accès aléatoire et des informations relatives à la résolution de la contention.

**6.** Procédé d'accès aléatoire par une station de base dans un système de communication sans fil, le procédé comprenant :

transmettre, à un terminal, une valeur seuil liée à la détermination d'un type d'accès aléatoire et d'informations relatives à l'accès aléatoire ;
recevoir, du terminal, un signal lié à un premier préambule pour l'accès aléatoire conformément aux informations relatives à l'accès aléatoire, le signal lié au premier préambule pour l'accès aléatoire étant reçu avec seulement un préambule ;
dans le cas où le signal lié au premier préambule pour l'accès aléatoire est reçu sur la base d'une ressource commune pour un type d'accès aléatoire à deux étapes et un type d'accès aléatoire à quatre étapes, transmettre, au terminal, un message B, Msg B, selon le type d'accès aléatoire à deux étapes comprenant un indicateur de temporisation et un message 2, Msg 2, selon le type d'accès aléatoire à quatre étapes comprenant un indicateur de temporisation, en réponse au signal lié au premier préambule ; et
recevoir, du terminal, un signal lié à un deuxième préambule,
dans lequel, si le signal lié au premier préambule est destiné à l'accès aléatoire à deux étapes, l'indicateur de temporisation inclus dans le Msg B est appliqué au signal lié au deuxième préambule, et
dans lequel, si le signal lié au premier préambule est destiné à l'accès aléatoire à quatre étapes, l'indicateur de temporisation inclus dans le Msg 2 est appliqué au signal lié au deuxième préambule.

**7.** Procédé de la revendication 6, dans lequel le Msg 2 comprend des informations de réponse sur l'accès aléatoire, et le Msg B comprend des informations de réponse sur l'accès aléatoire et des informations relatives à la résolution de la contention.

**8.** Procédé de la revendication 6, dans lequel, dans le cas où le signal lié au premier préambule est destiné à l'accès aléatoire à deux étapes, le signal lié au deuxième préambule est reçu après un temps de temporisation correspondant à l'indicateur de temporisation inclus dans le Msg B, et
dans lequel, si le signal lié au premier préambule est destiné à l'accès aléatoire à quatre étapes, le signal lié au deuxième préambule est reçu après un temps de temporisation correspondant à l'indicateur de temporisation inclus dans le Msg 2.

**9.** Terminal dans un système de communication sans fil, le terminal comprenant :

un émetteur-récepteur ; et
une commande configurée pour :

recevoir, d'une station de base, via l'émetteur-récepteur, une valeur seuil liée à la détermination d'un type d'accès aléatoire et d'informations relatives à l'accès aléatoire,
déterminer le type d'accès aléatoire comme étant un d'un type d'accès aléatoire à deux étapes et d'un type d'accès aléatoire à quatre étapes sur la base de la valeur seuil et de l'intensité d'un signal de réception reçu de la station de base,
transmettre, à la station de base, via l'émetteur-récepteur, un signal lié à un premier préambule d'accès aléatoire sur la base du type d'accès aléatoire déterminé et des informations relatives à l'accès aléatoire, le signal lié au premier préambule d'accès aléatoire étant transmis sur la base d'une ressource commune pour le type d'accès aléatoire à deux étapes et le type d'accès aléatoire à quatre étapes,

dans le cas où le type d'accès aléatoire déterminé est le type d'accès aléatoire à deux étapes, identifier, parmi un message B, Msg B, selon le type d'accès aléatoire à deux étapes et un message 2, Msg 2, selon le type d'accès aléatoire à quatre étapes, un indicateur de temporisation inclus dans le Msg B,

dans le cas où le type d'accès aléatoire déterminé est le type d'accès aléatoire à quatre étapes, identifier, parmi le Msg B et le Msg 2, un indicateur de temporisation inclus dans le Msg 2, et

transmettre, à la station de base, via l'émetteur-récepteur, un signal lié à un deuxième préambule sur la base de l'indicateur de temporisation identifié.

10. Terminal de la revendication 9, dans lequel la commande est configurée pour :

transmettre, à la station de base, via l'émetteur-récepteur, le signal lié au deuxième préambule après un temps de temporisation correspondant à l'indicateur de temporisation inclus dans le Msg B, dans le cas où le type d'accès aléatoire déterminé est le type d'accès aléatoire à deux étapes, et

transmettre, à la station de base, via l'émetteur-récepteur, le signal lié au deuxième préambule après un temps de temporisation correspondant à l'indicateur de temporisation inclus dans le Msg 2, dans le cas où le type d'accès aléatoire déterminé est le type d'accès aléatoire à quatre étapes.

11. Terminal de la revendication 9, dans lequel le signal lié au premier préambule est un message A, Msg A, comprenant un préambule et un message de demande de commande de ressources radio, RRC, dans un cas du type d'accès aléatoire à deux étapes, et

dans lequel le signal lié au premier préambule est un message 1, Msg 1, dans le cas du type d'accès aléatoire à quatre étapes.

12. Terminal de la revendication 9, dans lequel la commande est configurée pour déterminer le type d'accès aléatoire comme étant le type d'accès aléatoire à deux étapes si l'intensité du signal de réception est supérieure ou égale à la valeur seuil, et pour déterminer le type d'accès aléatoire comme étant le type d'accès aléatoire à quatre étapes si l'intensité du signal de réception est inférieure à la valeur seuil.

13. Terminal de la revendication 9, dans lequel le Msg 2 comprend des informations de réponse sur l'accès aléatoire, et le Msg B comprend des informations de réponse sur l'accès aléatoire et des informations relatives à la résolution de la contention.

14. Station de base dans un système de communication sans fil, la station de base comprenant :

un émetteur-récepteur ; et
une commande configurée pour :

transmettre, à un terminal, via l'émetteur-récepteur, une valeur seuil liée à la détermination d'un type d'accès aléatoire et d'informations relatives à l'accès aléatoire,

recevoir, du terminal, via l'émetteur-récepteur, un signal lié à un premier préambule pour l'accès aléatoire conformément aux informations relatives à l'accès aléatoire, le signal lié au premier préambule pour l'accès aléatoire étant reçu avec seulement un préambule,

dans le cas où le signal lié au premier préambule pour l'accès aléatoire est reçu sur la base d'une ressource commune pour un type d'accès aléatoire à deux étapes et un type d'accès aléatoire à quatre étapes, transmettre, au terminal, via l'émetteur-récepteur, un message B, Msg B, selon le type d'accès aléatoire à deux étapes comprenant un indicateur de temporisation et un message 2, Msg 2, selon le type d'accès aléatoire à quatre étapes comprenant un indicateur de temporisation, en réponse au signal lié au premier préambule, et

recevoir, du terminal, via l'émetteur-récepteur, un signal lié à un deuxième préambule,

dans laquelle, si le signal lié au premier préambule est destiné à l'accès aléatoire à deux étapes, l'indicateur de temporisation inclus dans le Msg B est appliqué au signal lié au deuxième préambule, et

dans laquelle, si le signal lié au premier préambule est destiné à l'accès aléatoire à quatre étapes, l'indicateur de temporisation inclus dans le Msg 2 est appliqué au signal lié au deuxième préambule.

15. Station de base de la revendication 14, dans laquelle le Msg 2 comprend des informations de réponse sur l'accès aléatoire, et le Msg B comprend des informations de réponse sur l'accès aléatoire et des informations relatives à la résolution de la contention,

dans laquelle, si le signal lié au premier préambule est destiné à l'accès aléatoire à deux étapes, le signal lié au deuxième préambule est reçu après un temps de temporisation correspondant à l'indicateur de temporisation inclus dans le Msg B, et

dans laquelle, si le signal lié au premier préambule est destiné à l'accès aléatoire à quatre étapes, le signal lié au deuxième préambule est reçu après un temps de temporisation correspondant à l'indicateur de temporisation inclus dans le Msg 2.

# FIG. 1A

FIG. 1B

FIG. 1C

EP 3 975 655 B1

# FIG. 1D

UE
[1d-01]

UE
[1d-01]

Random Access Preamble #N
[1d-11]

RAR Window
[1d-23]

Random Access Response for #N

(Indicated by RA-RNTI in PDCCH)
[1d-21]

Scheduled Transmission
[1d-31]

Contention Resolution
[1d-41]

# FIG. 1E

UE
[1e-01]

NB
[1e-03]

MsgA [1e-15]
Msg1 [1e-11]
Msg3 [1e-13]

------- PDCCH with RA-RNTI for MsgB [1e-17] -------
------ MsgB: Msg2+Msg4 (possibly with BI) [1e-19] ----

------ PDCCH with RA-RNTI for Msg2 [1e-31] -------
------- Msg2 (possibly with BI) [1e-33] ---------

MsgA [1e-25]

| PRACH<br>[Msg1: PRACH Preamble]<br>[1e-21] | Gap<br>[1e-22] | PUSCH<br>[1e-23] |

time

EP 3 975 655 B1

## FIG. 1F

```
                    ┌──────────────────────┐
                    │        START         │───(1f-01)
                    └──────────┬───────────┘
                               │
                    ┌──────────▼───────────┐
                    │ RECEIVE RANDOM ACCESS-RELATED │
                    │ CONFIGURATION INFORMATION FROM BASE STATION │──(1f-03)
                    └──────────┬───────────┘
                               │
                    ┌──────────▼───────────┐
                    │ TRIGGER RANDOM ACCESS │───(1f-05)
                    └──────────┬───────────┘
                               │
```

TWO-STEP RANDOM ACCESS IS PERFORMED? FOUR-STEP RANDOM ACCESS IS PERFORMED? (OR MSGA TRANSMISSION? MSG1 TRANSMISSION?) — (1f-07)

MSG1 TRANSMISSION

MSGA TRANSMISSION

RECEIVE MSG2 AND/OR MSGB ACCORDING TO PREAMBLE TRANSMISSION TIME POINT — (1f-11)

RECEIVE MSG2 ACCORDING TO PREAMBLE TRANSMISSION TIME POINT — (1f-21)

DETERMINE PREAMBLE_BACKOFF VALUE BASED ON BI VALUE INCLUDED IN MSGB — (1f-13)

DETERMINE PREAMBLE_BACKOFF VALUE BASED ON BI VALUE INCLUDED IN MSG2 — (1f-23)

PERFORM SELECTED RANDOM ACCESS — (1f-31)

RANDOM ACCESS IS SUCCESSFUL? — (1f-33)

NO

YES

END — (1f-41)

# FIG. 1G

**START** ~[1g-01]

RECEIVE RANDOM ACCESS-RELATED CONFIGURATION INFORMATION FROM BASE STATION ~[1g-03]

TRIGGER RANDOM ACCESS ~[1g-05]

[1g-07] TWO-STEP RANDOM ACCESS IS PERFORMED? FOUR-STEP RANDOM ACCESS IS PERFORMED? (OR MSGA TRANSMISSION? MSG1 TRANSMISSION?)

MSG1 TRANSMISSION

MSGA TRANSMISSION

[1g-11] RECEIVE MSG2 AND/OR MSGB ACCORDING TO PREAMBLE TRANSMISSION TIME POINT

[1g-21] RECEIVE MSG2 ACCORDING TO PREAMBLE TRANSMISSION TIME POINT

[1g-13] MSG1 RESOURCE (PRACH) USED FOR MSGA TRANSMISSION IS USED ONLY FOR TWO-STEP RANDOM ACCESS?

[1g-23] DETERMINE PREAMBLE_BACKOFF VALUE BASED ON BI VALUE INCLUDED IN MSG2

NO

YES

[1g-17] DETERMINE PREAMBLE_BACKOFF VALUE BASED ON BI VALUE INCLUDED IN MSGB

[1g-15] DETERMINE PREAMBLE_BACKOFF VALUE BASED ON LAST RECEIVED BI VALUE FROM MSGB OR MSG2

PERFORM SELECTED RANDOM ACCESS ~[1g-31]

[1g-33] RANDOM ACCESS IS SUCCESSFUL?

NO

YES

**END**

# FIG. 1H

START ~(1h-01)

RECEIVE RANDOM ACCESS-RELATED CONFIGURATION INFORMATION FROM BASE STATION ~(1h-03)

TRIGGER RANDOM ACCESS ~(1h-05)

(1h-07)
TWO-STEP RANDOM ACCESS IS PERFORMED? FOUR-STEP RANDOM ACCESS IS PERFORMED? (OR MSGA TRANSMISSION? MSG1 TRANSMISSION?)

MSG1 TRANSMITTED

MSGA TRANSMITTED

(1h-11)
RECEIVE MSG2 AND/OR MSGB ACCORDING TO PREAMBLE TRANSMISSION TIME POINT

(1h-21)
RECEIVE MSG2 ACCORDING T PREAMBLE TRANSMISSION TIME POINT

(1h-13)
DETERMINE PREAMBLE_BACKOFF VALUE BASED ON LAST RECEIVED BI VALUE FROM MSGB OR MSG2

(1h-23)
DETERMINE PREAMBLE_BACKOFF VALUE BASED ON BI VALUE INCLUDED IN MSG2

(1h-31)
PERFORM SELECTED RANDOM ACCESS

(1h-33)
RANDOM ACCESS IS SUCCESSFUL?

NO

YES

END ~(1h-41)

FIG. 1I

RF PROCESSOR [1i-10]

BASEBAND PROCESSOR [1i-20]

CONTROLLER [1i-40]

MULTI-CONNECTION PROCESSOR [1i-42]

STORAGE [1i-30]

FIG. 2

```
   210                      220                      230
┌─────────────────┐   ┌─────────────────┐   ┌─────────────────┐
│   TRANSCEIVER   │───│  UE CONTROLLER  │───│     STORAGE     │
└─────────────────┘   └─────────────────┘   └─────────────────┘
```

FIG. 3

| 310 | 320 | 330 |
|-----|-----|-----|
| TRANSCEIVER | BASE STATION CONTROLLER | STORAGE |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NTT DOCOMO et al.** Discussion on Procedure for Two-step RACH. *3GPP DRAFT; R1-1906193 DISCUSSION ON PROCEDURE FOR TWOSTEP RACH FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX,* 13 May 2019, vol. RAN WG1
- **EMAIL DISCUSSION RAPPORTEUR (ZTE.** Procedures and mgsB content [105bis#30][NR/2-step RACH. *3GPP DRAFT; R2-1906308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 03 May 2019, vol. TSG-WG2, 1-91
- **ERICSSON.** Fallback for 2-step RA. *3GPP DRAFT; R2-1906954 - FALLBACK FOR 2-STEP RA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 13 May 2019, vol. RAN WG2
- **ERICSSON.** Back-off for 2-step RA. *3GPP DRAFT; R2-1906955 - BACKOFF FOR 2-STEP RA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 13 May 2019, vol. RAN WG2
- **INTERDIGITAL INC.** Perspectives on Operation of Two-Step RACH. *3GPP DRAFT; R1-1902583 PERSPECTIVES ON OPERATION OF TWOSTEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN,* 16 February 2019, vol. RAN WG1 (Athens
- **ZTE CORPORATION et al.** Consideration on 2-step RACH procedure. *3GPP DRAFT; R2-1903549_CONSIDERATION ON 2-STEP RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 06 April 2019